(19) Europäisches Patentamt
European Patent Office
Office européen des brevets

(11) **EP 2 411 846 B1**

(12) **EUROPEAN PATENT SPECIFICATION**

(45) Date of publication and mention of the grant of the patent:
**16.01.2013 Bulletin 2013/03**

(21) Application number: **10712755.7**

(22) Date of filing: **26.03.2010**

(51) Int Cl.:
***G01V 3/38*** *(2006.01)*

(86) International application number:
**PCT/GB2010/000562**

(87) International publication number:
**WO 2010/109195 (30.09.2010 Gazette 2010/39)**

(54) **APPARATUS AND METHOD FOR FERROMAGNETIC OBJECT DETECTOR**

VORRICHTUNG UND VERFAHREN FÜR EINEN FERROMAGNETISCHEN OBJEKTDETEKTOR

APPAREIL ET PROCÉDÉ POUR DÉTECTEUR D'OBJET FERROMAGNÉTIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **27.03.2009 GB 0905327**

(43) Date of publication of application:
**01.02.2012 Bulletin 2012/05**

(73) Proprietors:
- **QinetiQ Limited**
  **Farnborough**
  **Hampshire GU14 0LX (GB)**
- **The Secretary of State for Business Innovation & Skills**
  **London**
  **SW1H 0ET (GB)**

(72) Inventors:
- **MACLEOD, Malcolm, David**
  **Worcester WR14 3PS (GB)**
- **BAXTER, Paul, Daniel**
  **Worcestershire WR14 3PS (GB)**
- **HORTON, Thomas, John**
  **Worcester WR14 3PS (GB)**
- **KEENE, Mark, Nicholas**
  **Worcestershire WR14 3PS (GB)**

(74) Representative: **Tocher, Alastair James**
**QinetiQ Limited**
**Intellectual Property**
**Malvern Technology Centre**
**St Andrews Road**
**Malvern**
**Worcestershire WR14 3PS (GB)**

(56) References cited:
**WO-A2-2006/036752**
**US-A- 5 896 031**
**US-A1- 2008 084 301**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 411 846 B1

Printed by Jouve, 75001 PARIS (FR)

## Description

The present invention relates to an apparatus and method relating to the detection of ferromagnetic objects, and in particular but not exclusively to an apparatus and method relating to the detection of ferromagnetic objects in the vicinity of magnetic resonance imaging (MRI) scanners.

Ferroguard-type sensors, such as those described in WO 2004/044620, are designed to detect ferromagnetic material passing through a "portal" (sensing region), for example at the entrance to an MRI facility, or for security purposes. The sensor sounds an alarm if there is simultaneously a person or equipment passing through the portal, and a detected magnetic signal at the sensors.

If someone is passing through the portal without any ferromagnetic threat material on them, but at the same time there is an interfering magnetic signal, then this can cause the alarm to be sounded. False alarms are undesirable because (a) false alarms reduce people's confidence in the sensor, causing them to be more prone to ignore its alarms when they are genuine, and (b) the interference makes it impossible for the sensor to detect whether or not ferromagnetic items big enough to merit an alarm are in fact passing through the portal at the time. US 5,896.031 discloses one approach applicable to a quad coil metal vibration cancelling metal detector.

It is desirable to provide a solution to this problem of false alarms.

According to a first aspect of the present invention there is provided an apparatus for compensating for the effect of a stray ferromagnetic object moving past but not through a sensing region of a ferromagnetic object detector, the ferromagnetic object detector being adapted to produce a plurality of sensor signals, each sensor signal being influenced by the presence of a genuine ferromagnetic object moving through the sensing region but also liable to be influenced by the presence of the stray object, and the apparatus comprising: an input for receiving the plurality of sensor signals; first means for analysing the received signals to determine whether there is a substantially same time-varying component present in each of the signals; second means for determining whether the plurality of signals without the contribution of that time-varying component are each or collectively below a predetermined level of significance; and third means for indicating, if the respective determinations from the first and second means are both positive, that the received signals are likely to relate to a stray object and not to a genuine ferromagnetic object moving through the sensing region.

The first means may comprise means for determining the dominant component of a vector made up of the plurality of sensor signals, each sensor signal comprising a plurality of time samples, and also a coefficient vector corresponding to the dominant component, the determination made by the first means being positive only if the coefficient vector is determined to be sufficiently close to an all-ones vector according to a predetermined measure of closeness.

The predetermined measure of closeness may be dependent upon an angle between the coefficient vector and the unit vector.

The coefficient vector may be determined to be sufficiently close if the angle is lower than 30°. Alternatively, the coefficient vector may be determined to be sufficiently close if the angle is lower than 25°. In an alternative embodiment, the coefficient vector is determined to be sufficiently close if the angle is lower than 10°.

The second means may comprise means for calculating the total power of the sub-dominant components, or those components other than the dominant component, the determination made by the second means being positive only if the sub-dominant power is determined to be below a predetermined threshold.

The vector of sensor signals may be denoted as $\mathbf{S} = \begin{bmatrix} \mathbf{s}_1 \\ \mathbf{s}_2 \\ \vdots \\ \mathbf{s}_n \end{bmatrix}$, where $n$ is the number of sensors and $\mathbf{s}_i$ is a 1-by-T vector of T samples from sensor $i$, wherein the coefficient vector corresponding to the dominant component of S is denoted by v, a 1-by-$n$ vector, and wherein a vector of the sub-dominant components is determined according to $S_{cleaned} = \mathbf{PS}$, where $\mathbf{P}$ is a projection matrix given by $\mathbf{P} = \mathbf{I}_n - \mathbf{v}^H\mathbf{v}$.

The sub-dominant power may be calculated according to $p_{cleaned} = trace\left(\mathbf{S}_{cleaned}\mathbf{S}^H_{cleaned}\right)$.

Preferably, each component of the unit vector is $\frac{1}{\sqrt{n}}\begin{bmatrix}1 & \cdots & 1\end{bmatrix}$, where $n$ is the number of sensors.

The angle between the coefficient vector and the unit vector may be determined as

$\phi = \cos^{-1}\left(\mathbf{v} \bullet \frac{1}{\sqrt{n}}\begin{bmatrix}1 & \cdots & 1\end{bmatrix}\right)$, where v is the coefficient vector.

The method may be performed taking account of variations in gain and/or alignment of the sensors.

According to a second aspect of the present invention there is provided a system comprising a ferromagnetic object detector and an apparatus according to the first aspect of the present invention.

According to a third aspect of the present invention, there is provided a magnetic resonance imaging scanner comprising a system according to the second aspect of the present invention.

According to a fourth aspect of the present invention, there is provided a method for compensating for the effect of a stray ferromagnetic object moving past but not through a sensing region of a ferromagnetic object detector, the ferromagnetic object detector being adapted to produce a plurality of sensor signals, each sensor signal being influenced by the presence of a genuine ferromagnetic object moving through the sensing region but also liable to be influenced by the presence of the stray object, and the method comprising: receiving the plurality of sensor signals; analysing the received signals to determine whether there is a substantially same time-varying component present in each of the signals; second means for determining whether the plurality of signals without the contribution of that time-varying component are each or collectively below a predetermined level of significance; and indicating, if the respective determinations from the first and second means are both positive, that the received signals are likely to relate to a stray object and not to a genuine ferromagnetic object moving through the sensing region.

According to a fifth aspect of the present invention there is provided a program for controlling an apparatus to perform a method according to the fourth aspect of the present invention or which, when loaded into an apparatus, causes the apparatus to become an apparatus according to the first aspect of the present invention. The program may be carried on a carrier medium. The carrier medium may be a storage medium. The carrier medium may be a transmission medium.

According to a sixth aspect of the present invention there is provided an apparatus programmed by a program according to the fifth aspect of the present invention.

According to a seventh aspect of the present invention there is provided a storage medium containing a program according to the fifth aspect of the present invention.

An embodiment of the present invention aims to detect when the signals at the sensors correspond to a distant object only, on the basis that the interfering objects are at greater distance from sensors than are any objects which are actually passing through the portal. If the method determines that there is a signal from a distant source and none from a nearby source, the alarm is suppressed. In other words, on the detection of a far-field signal, a method embodying the present invention should aim to prevent the Ferroguard system from alarming; however, if both a near-field and a far-field signal are present the system should be able to alarm as normal. This will have the effect of reducing the number of false alarms.

The aim of a system embodying the present invention is to reduce the level of false positives while not (or insignificantly) increasing the level of false negatives. In this respect, a "false positive" is one where the system issues an alarm when there is not actually a ferrous object near the sensors ("near" typically being within about 2 or 3 metres), while a "false negative" is one where the system does not issue an alarm when there is a ferrous object near the sensors.

While detecting all far-field signals would be ideal, it is more likely that an embodiment of this invention will only detect some of them because of the requirement to avoid the false negatives. In particular, two or more far-field signals occurring simultaneously may not be detected as far-field signals, because the signals they create at the sensors may not easily be distinguished from a possible near-field source.

Reference will now be made, by way of example, to the accompanying drawings, in which:

Figure 1 is a schematic flow diagram illustrating steps performed according to a method embodying the present invention;

Figures 2a, 2b and 2c show results from an experiment carried out in accordance with an embodiment of the present invention (dataset A1);

Figures 3a, 3b and 3c show results from an experiment carried out in accordance with an embodiment of the present invention (dataset A2);

Figures 4a, 4b and 4c show results from an experiment carried out in accordance with an embodiment of the present invention (dataset A3);

Figures 5a, 5b and 5c show results from an experiment carried out in accordance with an embodiment of the present invention (dataset A5);

Figures 6a, 6b and 6c show results from an experiment carried out in accordance with an embodiment of the present invention (dataset A8);

Figures 7a, 7b and 7c show results from an experiment carried out in accordance with an embodiment of the present invention (dataset A9); and

Figures 8a, 8b and 8c show results from an experiment carried out in accordance with an embodiment of the present invention (dataset A10).

The applicant has identified a source of interfering magnetic signals that is a significant cause of the false alarms described above: moving ferromagnetic objects that are passing by, but not passing through, the "portal" of the Ferroguard detector, at the same time as someone is passing through the portal. Examples of such a source of interference are: (a) moving steel wheelchairs, gurneys, trolleys, and gas cylinders in the corridor; and (b) cars or other vehicles underneath the portal or outside the building. It is desirable to provide a solution that takes account of these interfering magnetic signals.

Before moving on to a detailed description of an embodiment of the present invention, it is useful to consider what the general aims of a Ferroguard system are, and then to consider the general approach proposed in relation to an embodiment of the present invention.

A first aim of the Ferroguard system is to detect *all* ferrous objects above a certain size moving through the door screened by the system, and to trigger an alarm.

A second aim of the Ferroguard system is not to alarm based on signals caused by other sources (false positives).

When these two aims conflict, a false positive is much more preferable than a false negative.

An embodiment of the present invention is aimed particularly at reducing false positives caused by objects far away from the detector, which result in far-field signals at the detector. Devising a technique for removing a far-field signal is not straightforward, as such a signal cannot generally be characterised to a sufficient degree.

Instead, an embodiment of the present invention does not seek to remove a far-field source of interference from the signals; instead it aims to detect when such a source of interference is acting on the sensors. If such a detection occurs then the system should not alarm. As a result of this, such a detection should not occur when both a far-field source and a near-field source are operating. Nor should such a detection occur if several far-field signals are affecting the sensors in a way that is indistinguishable from a near-field signal.

Such a method will not realistically remove all false positives caused by far-field signals, and may not work if there is more than one far-field signal present. This is likely to cover a large number of far-field false positives, and so removing these is considered to be a significant improvement over a system with no far-field rejection capability.

The approach adopted in an embodiment of the present invention revolves around (a) the combined use of more than two magnetic sensors (the known system uses a pair of sensors on each side of the "portal", but these pairs operate independently of each other); and (b) the use of algorithms which determine whether the combined multi-sensor signal results almost entirely from a distant source (i.e. it does not contain any signals corresponding to nearby sources).

Multiple magnetic sensors are already known to be used as gradiometers (the simplest example is to take the difference between the outputs of two magnetic sensors). Inherently this enables the cancellation of the signal from sufficiently remote sources (for which the signals in the two sensors can be expected to be identical, assuming they have been calibrated to have equal gain). Further sensors can be added to provide additional gradient measurements (to fully specify a magnetic field requires 9 different gradient values). It is well understood that gradient signals fall away more quickly as a function of source distance than do "total field" signals, and therefore that gradiometers have greater sensitivity to close objects than far objects.

However, it will be apparent that the approach adopted in an embodiment of the present invention is quite different, and does not use multiple sensors as a gradiometer.

The main method of achieving far-field rejection in the currently-proposed system relies upon differencing two sensor outputs. This reduces the approximately $r^{-3}$ distance attenuation of a single sensor to $r^{-4}$ attenuation for the differenced result. While this is useful against some far-field signals, others are sufficiently powerful that this method does not work. In particular, moving cars and similar at ranges of five metres or more create significantly large perturbations, even on differenced signals.

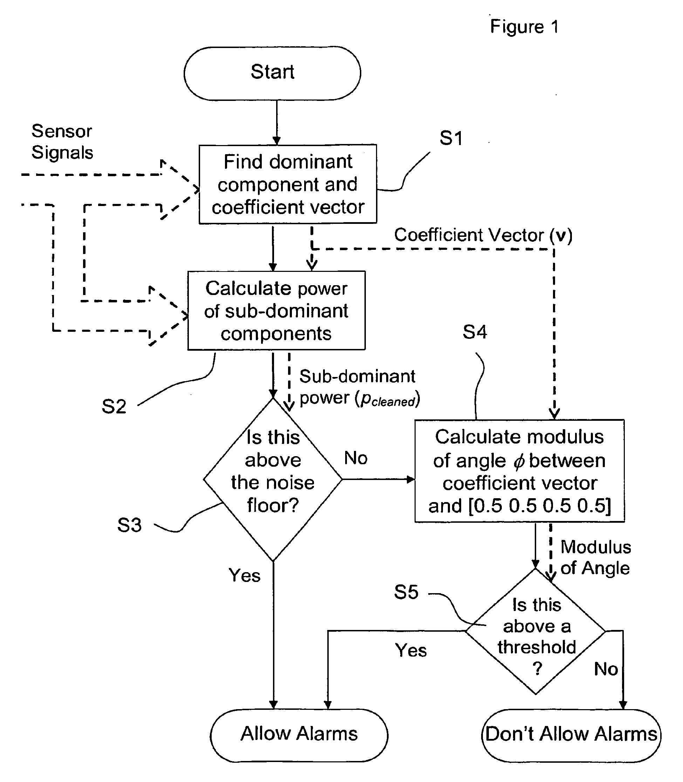

An embodiment of the present invention will now be described in more detail with reference to Figure 1. An apparatus according to an embodiment of the present invention can also be inferred from Figure 1, with a corresponding set of blocks adapted to perform each of the functions illustrated in Figure 1.

This embodiment uses the outputs of all four Ferroguard sensors, with the underlying rationale being that a far-field signal will normally be producing a similar signal on all four of the sensors. This requires all four sensors to have substantially the same alignment. (It will be appreciated that it is not essential to use four sensors, it merely being necessary to use three or more sensors. It is also possible to use a calibration technique, described further below, to compensate for any differences in sensor alignment or the like).

It is envisaged that the presently-described method will be performed after the application of any single-sensor techniques described elsewhere, such as filtering and interference cancellation for removing measured and modelled signals. Thus, where "sensor outputs" are mentioned herein, this should generally be taken to mean the sensor outputs after any single-sensor processing techniques have been applied.

The proposed method consists of five steps as illustrated schematically in the flow diagram of Figure 1. These steps will first be described in brief, and then in further detail.

In step S1, the dominant component is found by combining the four sensor outputs.

In step S2, the total power is found in the four signals after the effect of this dominant component is removed.

In step S3 it is determined if the total power remaining is significantly above the noise floor.

If "yes" in step S3, then either the signal is not far-field, or there are more than one far-field signals - the system should alarm as usual.

If "no" in step S3, it is considered how close (in angle) the coefficient vector producing the dominant component is to the unit vector [0.5 0.5 0.5 0.5], and the calculation of this angle is performed in step S4.

In step S5 it is determined if this angle is near 0. If "yes" in step S5, then it is to be assumed that the sensors are receiving a single far-field signal and the system should not alarm. If "no" in step S5, the signal is probably a small near-field signal and the system should alarm as usual.

Each of these steps will now be considered, in turn, in further detail.

With regard to step S1 of Figure 1 ("calculate dominant component"), it is assumed in a method according to an embodiment of the present invention that a single far-field signal will cause almost identical responses on all the Ferroguard sensors, subject to certain conditions:

- The sensors are all calibrated to have the same voltage response to a given field strength;
- The sensors are all aligned in the same direction, so they are measuring the same component of the field;
- The same single-sensor techniques (filtering, interference cancellation) have been applied to all of the sensors in the same way (although different interference cancellation coefficients can be used).

Given these three conditions, a single far-field source will create an identical response at each sensor. Multiple far-field responses might also give an identical response at each sensor. At least one of the above conditions can, however, be relaxed, assuming that some compensation or calibration technique is employed; this is described further below.

As a source moves into the near-field it will produce different amplitude responses at different sensors. A moving source (e.g. passing car) where the range varies will therefore produce different time varying functions at the different sensors (although if it begins or ends in the far-field the beginning or end of the functions will be identical).

As a source moves even closer to the sensors, the vectors from the source to the different sensors become significantly different, and so very different functions can be observed at the different sensors.

If a small source passes close to one of the sensors (and sufficiently far away from the other sensors not to register significantly above the noise floor) then it will only create a response function on that sensor.

An embodiment of the present invention aims to detect the first of these four cases (far-field source). If this is the only signal present then carrying out principal components analysis (singular value decomposition) on a small block of data should reveal that:

- There is only one dominant component, with a corresponding large singular value
- The other singular values are similar to the noise floor
- The coefficient vector corresponding to the dominant component is close to the [0.5 0.5 0.5 0.5] vector (i.e. consists of equal contributions from all four sensors)

To calculate the dominant component and its coefficient vector, a wide range of different algorithms can be used. Note that the full singular value decomposition is not required, and hence significantly faster techniques can be used. One suitable technique is applying the power method to the covariance matrix, which extracts the dominant eigenvector first; this will be the required coefficient vector.

With regard to step S2 of Figure 1 ("calculate sub-dominant power"), processing is performed to calculate the power in the sensor signals once the contribution of the dominant component has been removed. This can be done via a simple algebraic transformation of the block of sensor inputs.

The block of sensor inputs is denoted as:

$$\mathbf{S} = \begin{bmatrix} \mathbf{s}_1 \\ \mathbf{s}_2 \\ \mathbf{s}_3 \\ \mathbf{s}_4 \end{bmatrix}$$

where $\mathbf{s}_1$ for example is the 1-by-T row vector of T samples in the data block from sensor 1. The coefficient vector corresponding to the dominant component of **S** is denoted by **v**, a 1-by-n vector with n being the number of sensors (four in this embodiment). The signals with the contribution of the dominant component removed can be calculated using the projection matrix **P** given by:

$$\mathbf{P} = \mathbf{I}_n - \mathbf{v}^H \mathbf{v}$$

$$\mathbf{S}_{cleaned} = \mathbf{PS}$$

The total subdominant power is given by the trace of the covariance matrix of the cleaned signals:

$$p_{cleaned} = trace\left(\mathbf{S}_{cleaned}\mathbf{S}^H_{cleaned}\right)$$

Notice that if the data matrix consisted of only noise, then this total subdominant power will be approximately 3 times (n-1) times the background noise power.

Turning now to step S3 of Figure 1 ("compare sub-dominant power"), this processing stage uses the sub-dominant power calculated in the previous step to decide if there is more than just a single signal effect taking place in the data block. This is done via a simple threshold comparison - if the sub-dominant power is above a certain threshold then the data block either contains more than one signal, or a complex signal that cannot therefore be simply a far-field signal. Therefore if the threshold is exceeded the Ferroguard system should alarm as normal, and the rest of the processing in this technique does not need to be carried out.

If the threshold is not exceeded then further processing may be required to discriminate between different types of signal that may make a single dominant signal effect on the sensors.

Deciding upon a suitable threshold level is a complicated decision, with the following as possible considerations:

The value of the threshold might be based upon the noise statistics of the sensors; so it is never (or very rarely) exceeded if the sensors are only receiving noise;

A high value of the threshold allows for nearer 'far-field' signals to be (possibly) eliminated as causes of false alarms in the Ferroguard system. This is because as far-field signals move closer to the sensors the amount of power they contribute to the sub-dominant signals increases.

Too high a value of the threshold may allow the case where there is a far-field signal and a near-field signal to be passed onwards for possible elimination as a source of alarm. If this is not detected by the following processing this will cause a false negative (which we are trying to avoid)

One possible value for use in this decision is about four times the maximum value achieved by the sum of four noise channels when the system is set up in its intended operating environment A lower value might be preferable, but an evaluation should be made to determine if it causes false negative problems in particular situations.

With regard to step S4 of Figure 1 ("calculate modulus of angle"), assuming that there is a single dominant component, this section tries to determine if this component comes from a far-field signal. It does this by looking at the coefficient vector that produced the dominant component, **v** , and assessing how close in angle it is to the theoretical vector produced by a far-field signal.

Theoretically a far-field signal will produce an equal effect on each sensor, and so the vector will be:

$$\frac{1}{\sqrt{n}}\begin{bmatrix}1 & \cdots & 1\end{bmatrix}.$$

where $n$ is the number of sensors. The dominant component vector **v** will be close to this if the signal is caused by a far-field contribution, although as the source moves closer to the sensor it will start producing a more powerful response on the closer sensors than on the further sensors. A simple way of measuring how close this vector is to the unit vector is to look at the angle between them:

$$\phi = \cos^{-1}\left(\mathbf{v} \bullet \frac{1}{\sqrt{n}}\begin{bmatrix}1 & \cdots & 1\end{bmatrix}\right)$$

Note that this requires **v** to be normalised so that it is a unit vector; this is a well known standard procedure.

This analysis is only accurate if all the flux-gate sensors are aligned to measure the same component of the magnetic field and have the same direction. If some of the sensors have their direction turned through (or changed by) 180 degrees, then the terms in the vector of ones corresponding to the direction-reversed sensors need to be replaced by -1. If the alignments of the sensors differ then the performance of the technique described here degrades as a result.

With regard to step S5 of Figure 1 ("compare modulus of angle"), the final stage of processing is to compare the modulus of the angle calculated in the previous step with a certain threshold. If the modulus of the angle is below this threshold, then the dominant signal is considered likely to come from a single far-field source and hence the Ferroguard system should not alarm. However if this modulus of the angle is above the threshold then the dominant signal probably comes from a much closer signal, possibly a small signal near a single sensor or something similar.

Deciding on a sensible value for the threshold will depend on the application concerned; too large a value might lead to false negatives, while too small a value could lead to false positives. One possible value is 25 degrees. Experimentally this seems to work well; it ignores small single sensor responses easily and catches most of the far-field signals, but this can be modified to take account of the particular scenario encountered. More comments on suitable values for this are provided below.

Results from applying the proposed technique to a selection from ten different sets of data collected at a research facility will now be considered. The aims of looking at these results are to: (a) demonstrate the ability of the technique to avoid false negatives; (b) demonstrate the ability of the technique to reduce false positives; (c) show which of the two decisions was used when it returns an 'allow alarms' result, enabling the relative importance of the two decisions to be seen; (d) consider types of signal for which the technique does not return 'don't allow alarms', where it perhaps should; (e) consider the effects of changing the parameters in the decisions; and (f) compare using this technique with the alternative technique of removing the 'total field signal' produced by the coefficient vector [0.5 0.5 0.5 0.5].

The ten data sets considered consist of about 2000 seconds worth of data, of which most is just noise. About 300 seconds worth of it contains 'signals', i.e. there is some signal above the noise level, so the existing Ferroguard system would alarm. These signals can be categorised into three sets, using the flags in the data marking when events took place:

- Near-field Signals: Flags mark when an attempt was made to pass through the Ferroguard sensors carrying something (usually ferrous). Each instance of this consists of 1 to 6 seconds worth of 'signal' (duration depends mainly on the strength of the signal);

- Far-field Signals: Some flags mark when a vehicle passed by on the road outside the room the Ferroguard sensors were set up in. These were at a distance of 5 to 7 metres at closest approach, and as such are close to being far-field signals;

- Near- and Far-field Signals: Occasional flags mark when a near-field signal was being created at the same time as a vehicle drove past, so both near- and far-field signals were present in the data at the same time. This was rare, only occurring in 0.3% of the data.

The method then categorises each section of data into 'Allow Alarms' and 'Don't Allow Alarm'. The table below shows how each set was divided amongst these two alarm states:

| | Near-field Signals | Near-field Signals + Far-field Signals | Far-field Signals |
|---|---|---|---|
| Allow Alarms | 179 | 6 | 15 |
| Don't Allow Alarms | 0 | 0 | 108 |

The cells above in dashed bold outline show that in these tests the method was not seen to create any false negatives. In the case of near-field signals there are 179 samples to base this on, so one can be confident of a low rate of false negatives in this case. In the near-field + far-field signal case there are only a few samples, and so the confidence level is lower.

The cell above in solid bold outline shows that in 15 cases out of 123 possible cases a far-field signal would be allowed to cause an alarm. This demonstrates an 88% reduction in the false alarm rate; however, because of the limits of the set-up this will not translate into a similar reduction in implementation. The tests had only one type of false alarm signal, vehicles (with different sizes and speeds) passing by with a 5 to 7 metre closest approach. Generalising from this to all possible far-field signals is difficult.

Overall, these results do suggest that the method offers good gains in false positive removal.

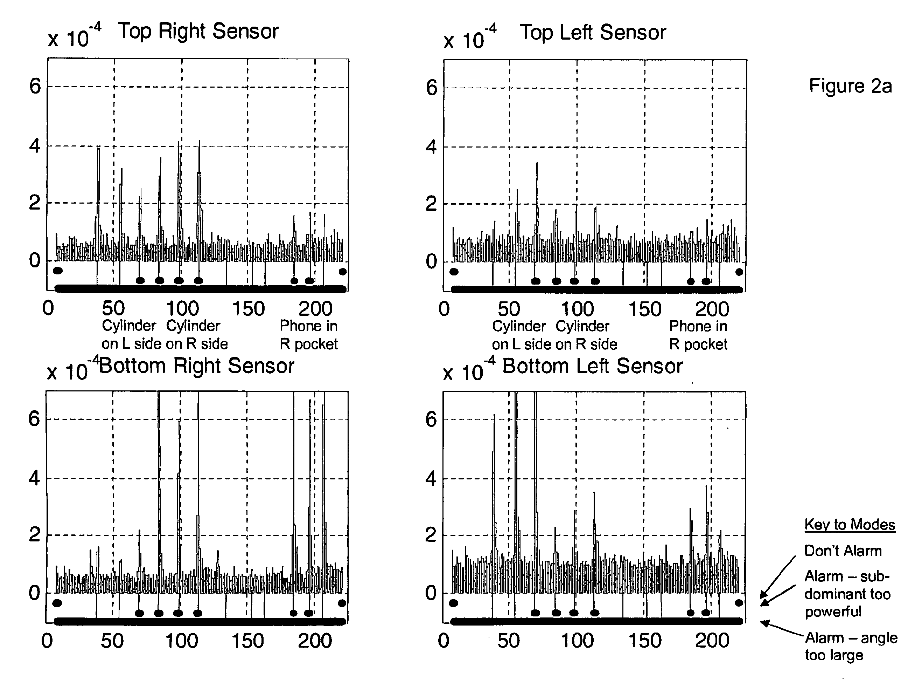

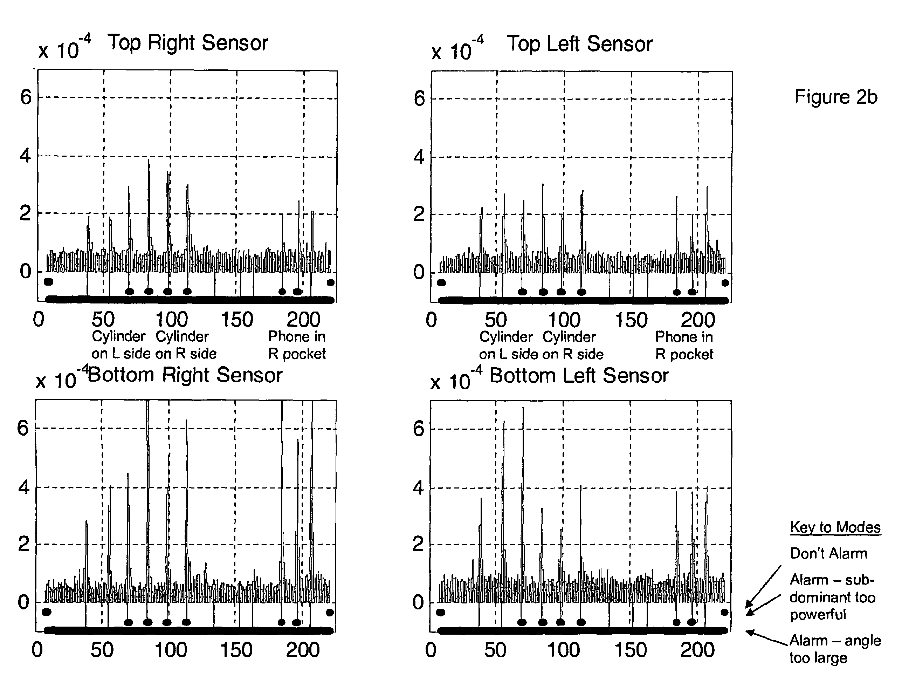

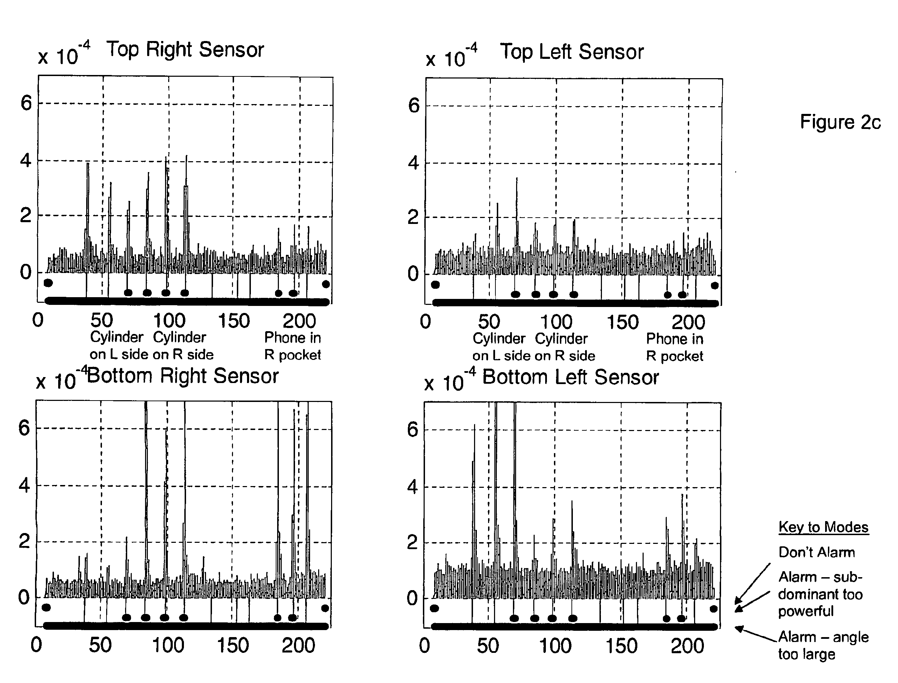

The results for each of several datasets will now be considered in turn. Each of Figures 2 to 8 is divided into three parts: (a), (b) and (c), with these three parts showing data as follows:

(a) the original data at each sensor;
(b) the original data with the dominant component (also referred to as the total field component, produced by the coefficient vector [0.5 0.5 0.5 0.5]) removed from it;
(c) the original data with the dominant component subtracted but with the result set to zero wherever the "Don't Allow Alarms" signal was activated.

Dots indicating times at which (a) the "Don't Allow Alarms" signal was active, (b) the "Allow Alarms" signal was active because step S3 of Figure 1 indicated that the power in the subdominant component was too large, and (c) the "Allow Alarms" signal was active because step S5 of Figure 1 indicated that the modulus of the angle was too large.

The above-mentioned "flags" are shown in Figures 2 to 8 by the vertical lines placed in the region of the above dots, and the events or objects associated with some of those flags are indicated by labels placed between the upper and lower two plots on each Figure.

In the Figures, and description below, "R" is an abbreviation for "Right" or "Right hand", and similarly "L" is an abbreviation for "Left" or "Left hand".

Data set A1 contains only data with items passing through the Ferroguard portal, and no obvious far-field signals. Results for this data set are shown in Figures 2a to 2c. The graphs show that there is very little difference between the original data (Figure 2a) and the data with the total field component removed (Figure 2b), while the data following the far-field detection (Figure 2c) is almost entirely identical to the original data.

The only exceptions, where the method "Don't Allow Alarms" signal was erroneously activated, are at the two ends of the data set. This is due to the way that the filters were implemented in these tests; as a result the first and last blocks contain similar signals and so are treated as far-field signals by the detector. This would not be of concern in a real system.

When there is no signal present, the deciding factor in the algorithm's behaviour is that the angle is too large. This is expected, because the large value of the sub-dominant power threshold means that when only noise is present it is expected that the criterion will be met. Thus the angle criterion is important to the correct operation of the method and in these cases it usually returns an 'Allow Alarms' response.

The exceptions to this are the data sections containing significant signals from ferrous objects. In these the deciding factor is the test of the sub-dominant signal power, returning an 'Allow Alarms' response. This confirms that large ferrous objects passing through the door produce more than a single dominant component, and so the decision process is working as expected.

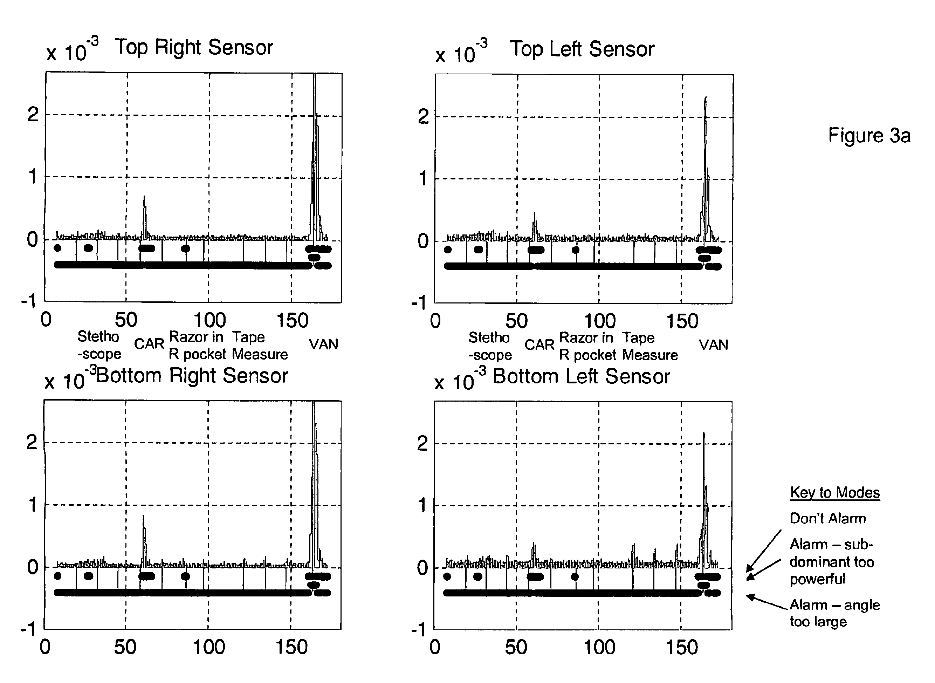

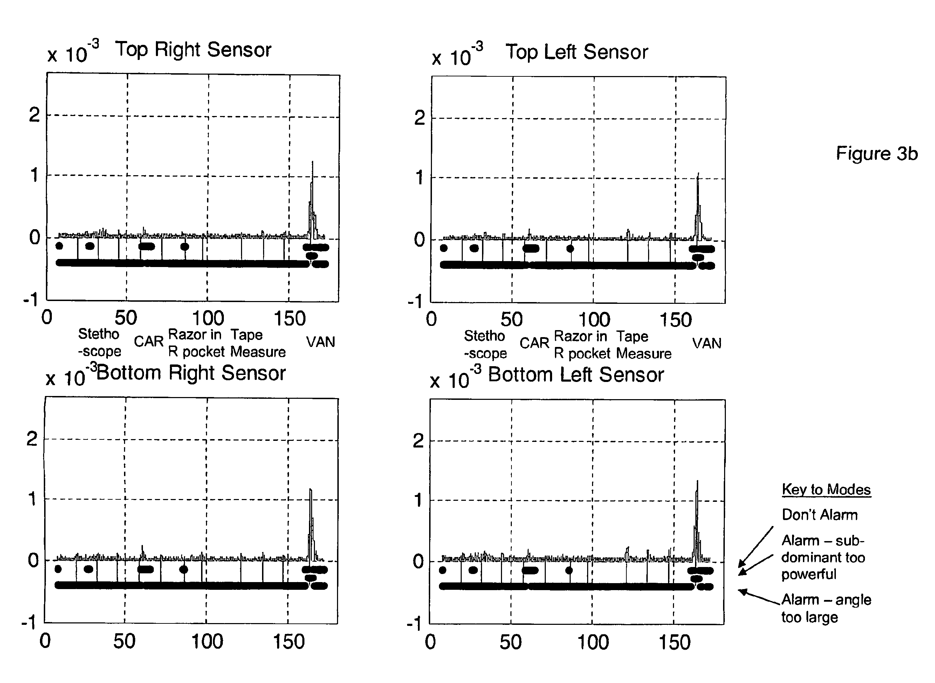

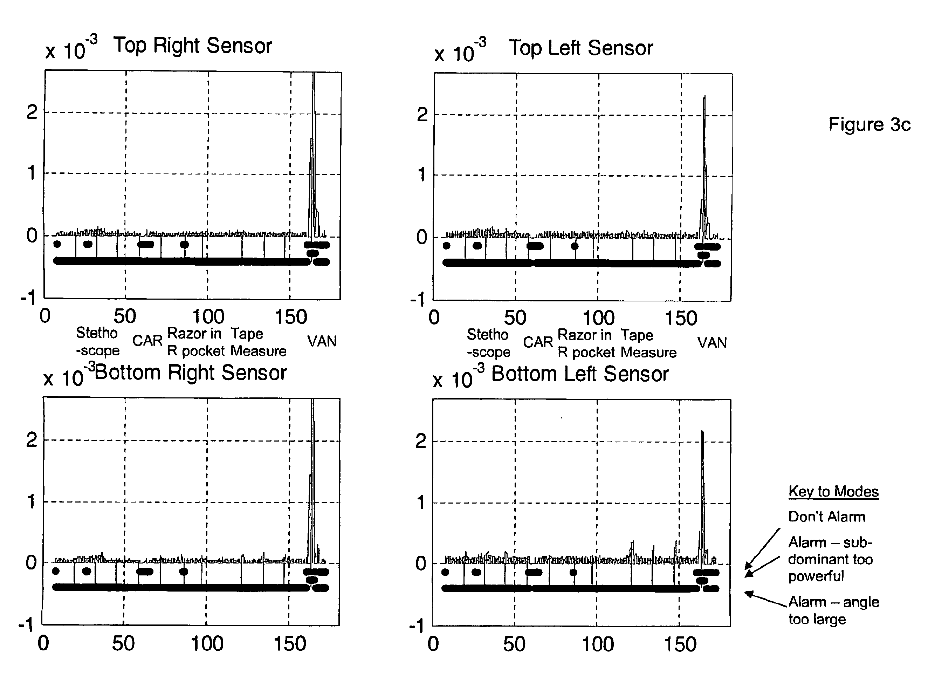

Data set A2 contains more items being passed through the Ferroguard portal. Results for this data set are shown in Figures 3a to 3c. It also contains sections where a car and a van passed by on the road near the set-up (at a distance of 5 to 7 m depending on which side of the road the vehicle was on). As in the A1 data set, the technique has made the right decision on all the sections of the data containing objects passing through the portal, i.e. 'Allow Alarms'.

The section of the data around the car passing the sensors is very useful to aid understanding. The magnitude of this car signal is larger than that of the signals produced by the objects passing through the portal in this data set (although it is of a similar magnitude to some of the object-generated signals we have observed in other data sets). The total field component removal reduced this magnitude considerably, but not enough to remove the signals from consideration. The remaining signal is larger than the signals produced by a razor in the pocket, which is something we would want to alarm on. This demonstrates that the total field removal does not remove all far-field signals.

In contrast, the proposed far-field detection method has clearly detected the car as a far-field signal and correctly returned a 'Don't Alarm' decision for five blocks of 1 second duration.

The end section of data where a van passed by the facility is also enlightening; the signal generated by the van is about five times larger than that generated by the car, and is detectable for about twice as long. The first two seconds of it and last three seconds of it are detected by the far-field detection algorithm and a 'Don't Alarm' decision is returned. However the central four seconds are not detected as a far-field signal, because the sub-dominant power is too large. Thus these sections of data are not removed, and the Ferroguard system can potentially alarm on them.

This is useful, as it shows the limits of the proposed detection algorithm - the van when passing close to the sensors is not in the far-field and so is not going to be removed. It is possible that another variant of the algorithm could do better at detecting the van signal as far-field, by relying more upon the angle and less upon the sub-dominant power (this is achieved by adjusting the thresholds). However this would be a trade-off between increasing detection power and increasing the risk of false negatives.

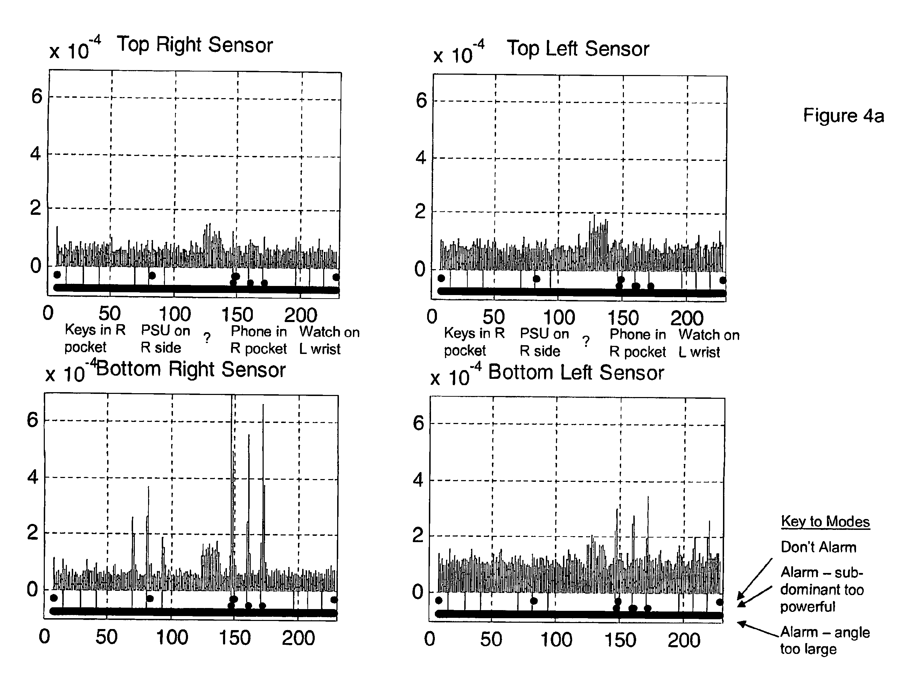

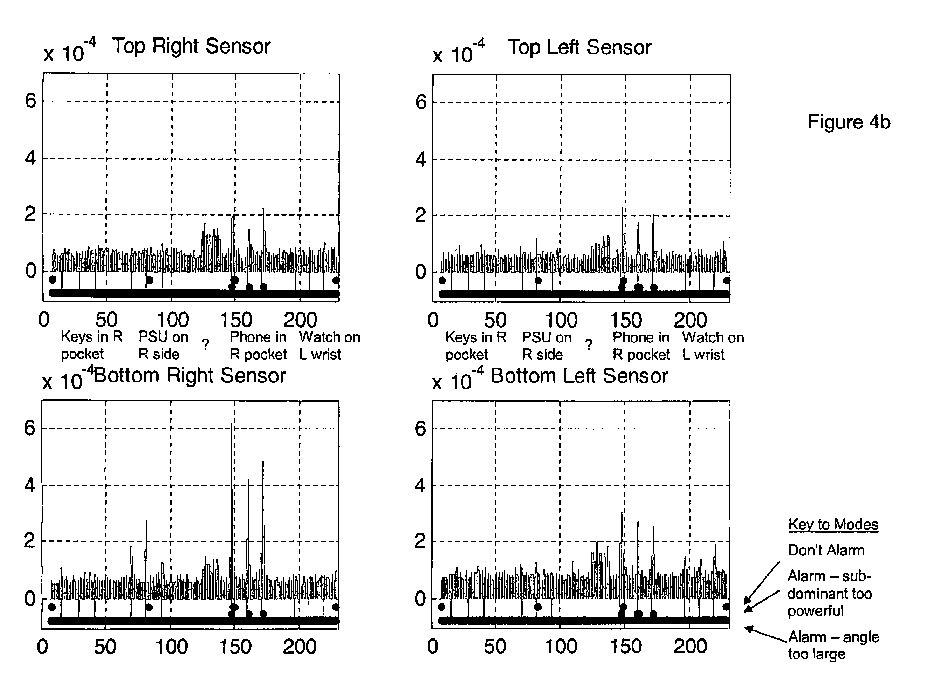

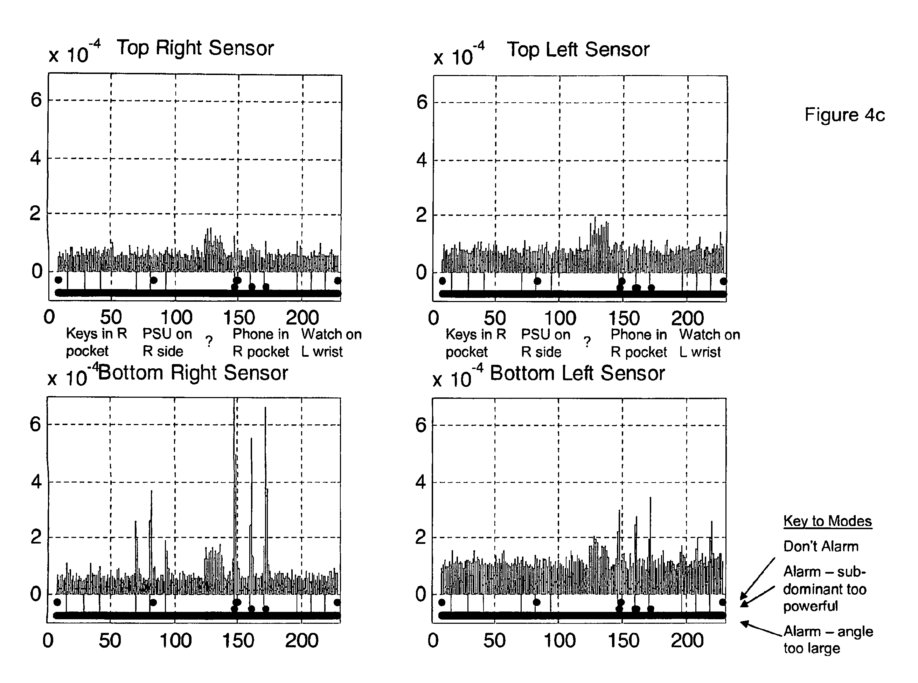

Data set A3 contains several more items being passed through the Ferroguard portal, and one unknown signal which has an unknown cause. Results for this data set are shown in Figures 4a to 4c. It is worth noticing that the weakest of the signals (keys in R pocket) barely results in a noticeable signal on any of the sensors. It possibly creates a minor change on the bottom R sensor, which is to be expected as this is the sensor closest to the R pocket of a person.

In contrast, the power supply unit (PSU) creates a much larger signal, comparable in power to some of the car signals. Unsurprisingly, this is sufficiently large to ensure that the sub-dominant signal power is above the threshold in the detection algorithm.

This data set contains another set of objects which the far-field detection algorithm correctly determines do not come from a far-field source. This is useful, as we now have a wide range of differing signal powers and locations, all of which are not detected as far-field by the algorithm.

There is a fifteen second burst of unknown signal in this data set. It looks as if the noise level has been increased. The far-field detection algorithm does not suggest that this is a single simple far-field signal.

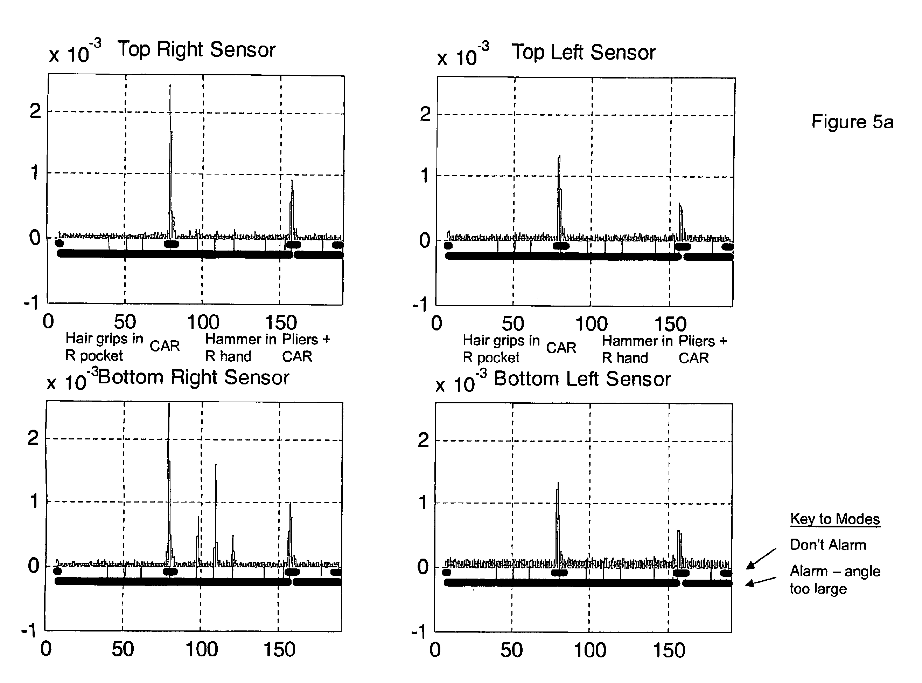

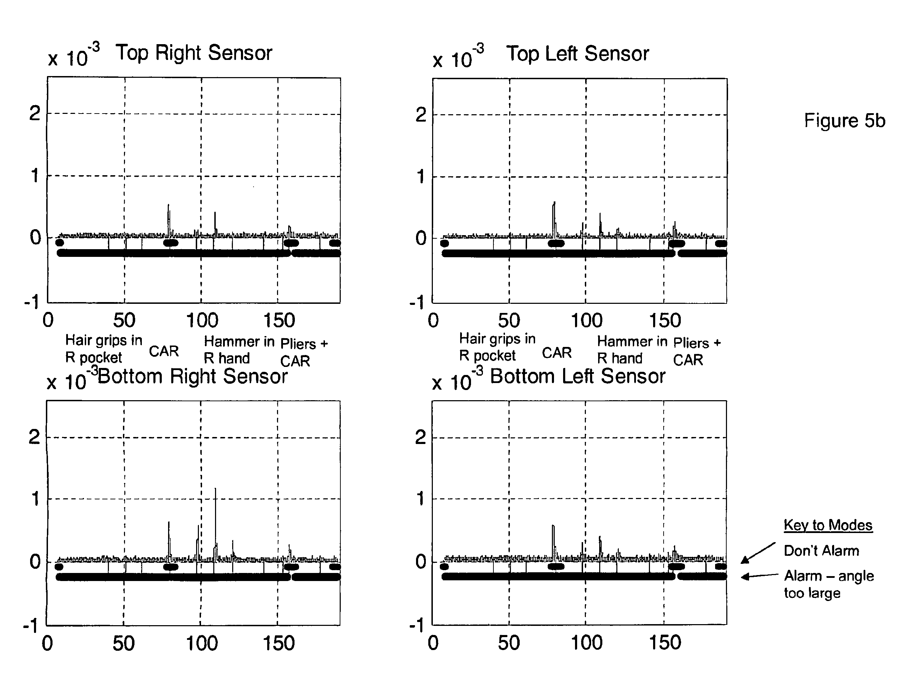

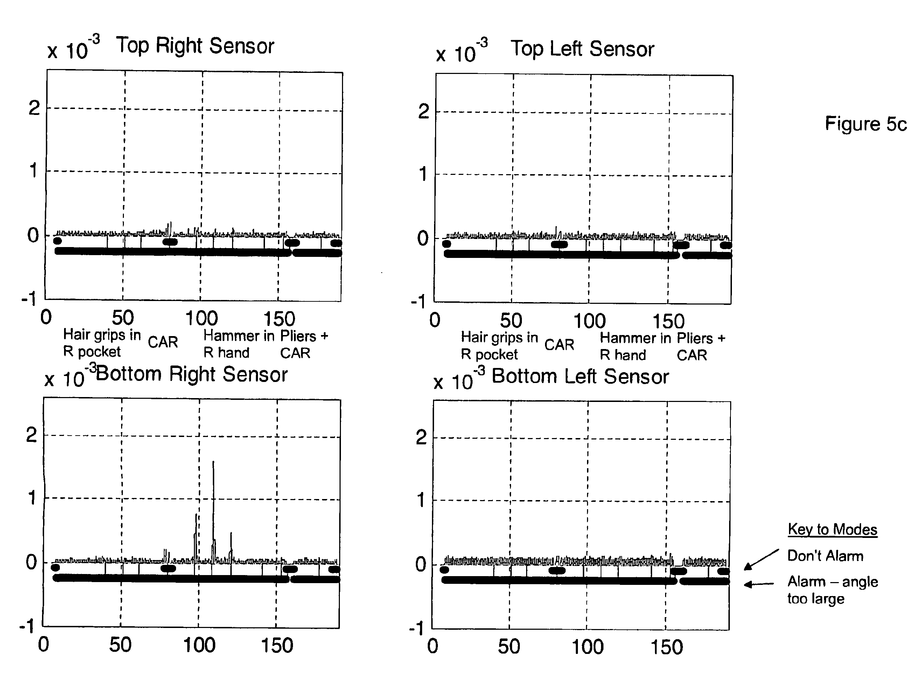

Data set A4 will not be described here (it is small and contains only two different types of object, coins and scissors). Data set A5 contains three types of objects, and two occurrences of a car driving past. Results for this data set are shown in Figures 5a to 5c. The hairgrips are the best example we have of a set of objects that produce too small a signal to be detected. The hammer produces a very large signal, while the pliers produce a surprisingly small signal which is just noticeable on the bottom left sensor.

There are two car signals in data set A5. Both of these are successfully detected by the far-field detection algorithm, for the whole of their duration. This is despite the fact that one of these two signals is similar in strength to the van signal that was not entirely classified as far-field. This may be due to the van being a more distributed source, or having slightly more power than the faster car (the van signal was detectable for 9 seconds, the powerful car signal for 6 seconds).

The suppression of the car signals in this data set is very good, and demonstrates the far-field detection algorithm working very effectively.

Data set A6 contains a single, weak, car signal of 6 seconds duration which is totally suppressed by the far-field detection algorithm, and a set of screwdriver motions through the Ferroguard portal, which are not suppressed.

Data set A7 contains no data of interest.

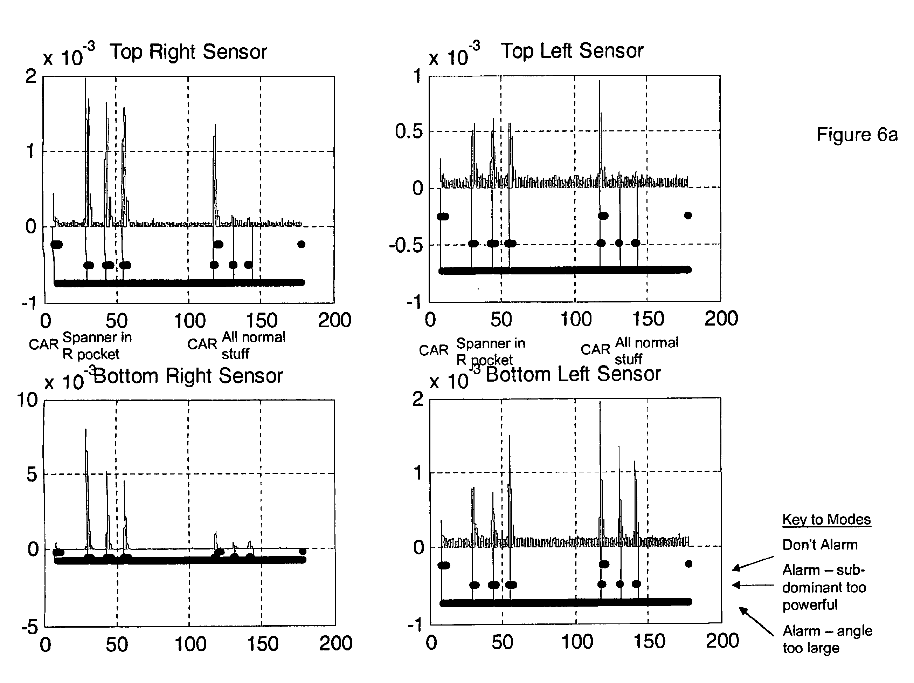

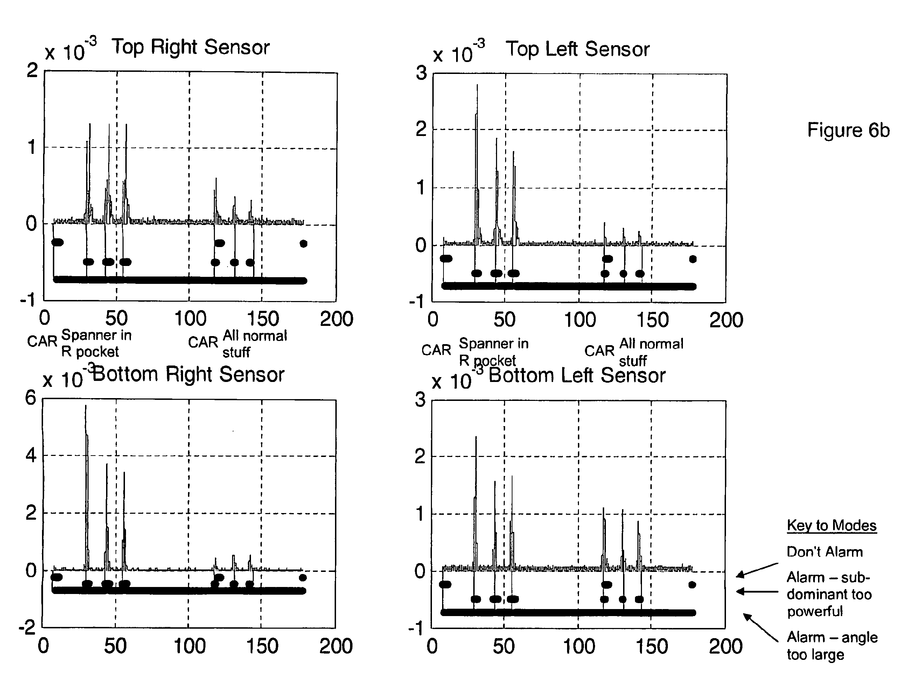

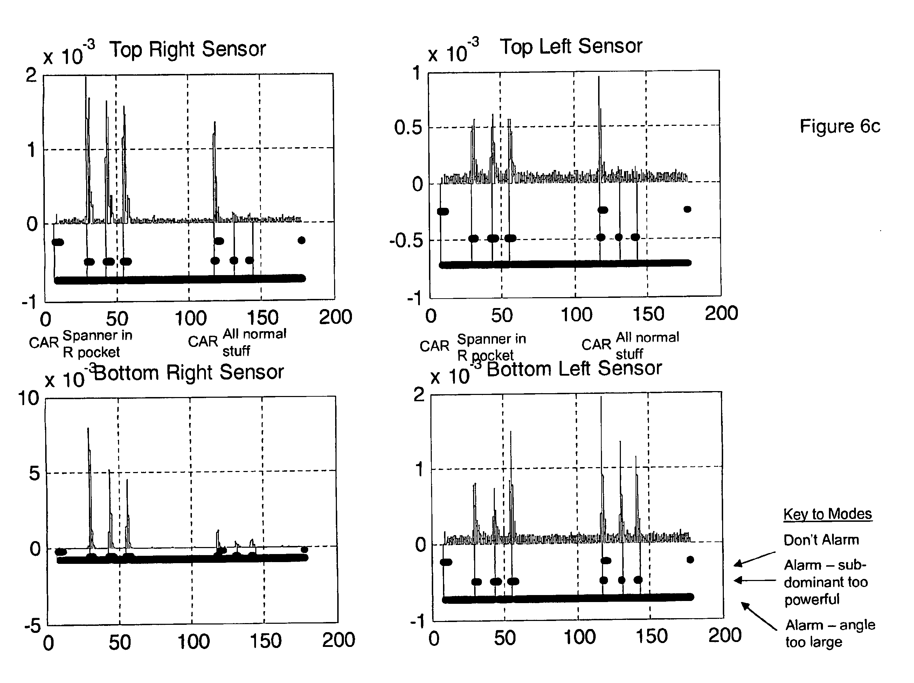

Data set A8 contains two sets of objects passing through the Ferroguard sensors and two car signals. Results for this data set are shown in Figures 6a to 6c. The first object is a spanner, which creates very large signals, especially on the sensor it is closest to. Despite creating large signals, this is correctly not detected as a far-field signal by the algorithm. The second 'object' is a complete set of minor objects (keys, phone, pass, wallet, watch and shoes) as might be worn by someone who completely forgot about the MRI chamber rules. While these create smaller signals than the spanner, they are significant, and create significant sub-dominant power, so they are again correctly not labelled as far-field signals by the algorithm. This demonstrates that the technique is not fooled into false negatives (via false labelling as far-field) by multiple, spatially separated, near-field signals.

The two car signals are both fairly obvious. However, one is mainly in the early section of the data before the filters have had a chance to settle. The tail of this signal is successfully removed by the far-field detection algorithm. The second car signal is almost co-incident with one of the 'normal stuff' near-field signals. Interestingly, this leads to the car signal not being labelled as far-field, and so the algorithm would alarm as hoped. However, the car signal is larger than the 'normal stuff' signal, and so the tail of the car signal (one second's worth) is detected as a car signal and removed from consideration for alarming. This again demonstrates that the proposed algorithm avoids introducing introduce false negatives, but if possible will reduce the level of false positives.

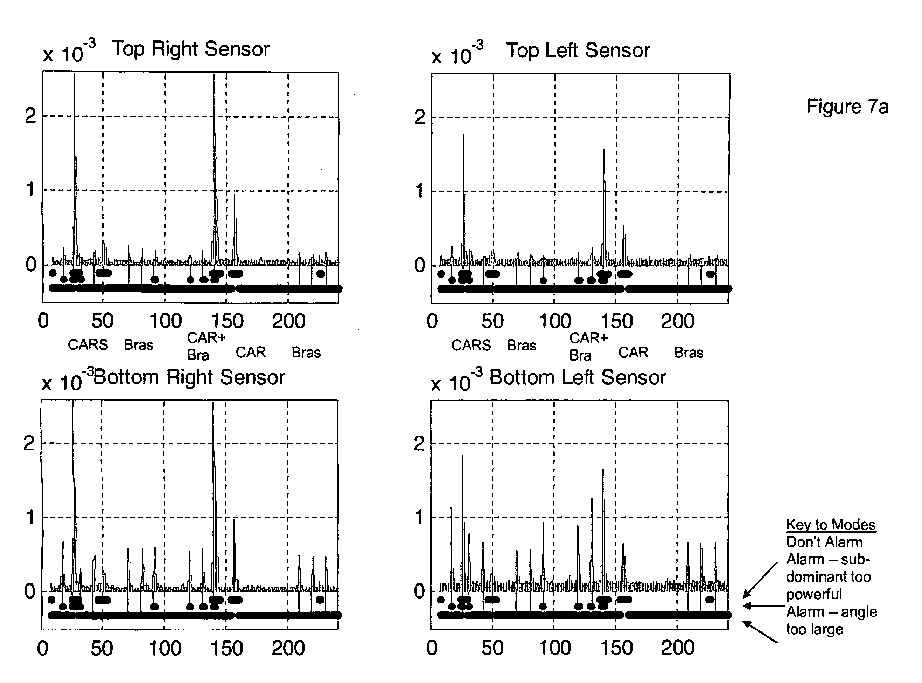

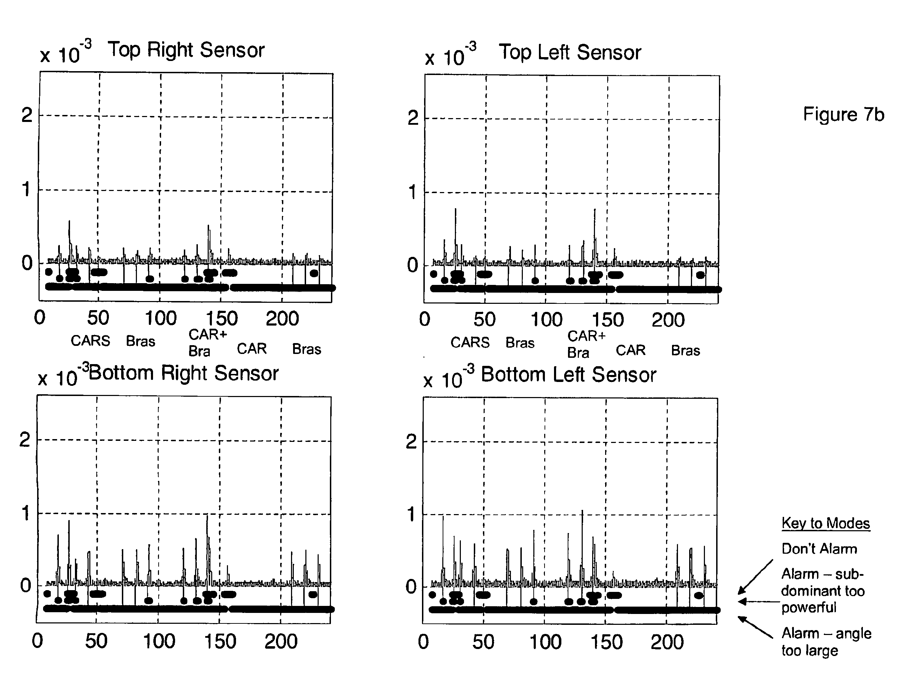

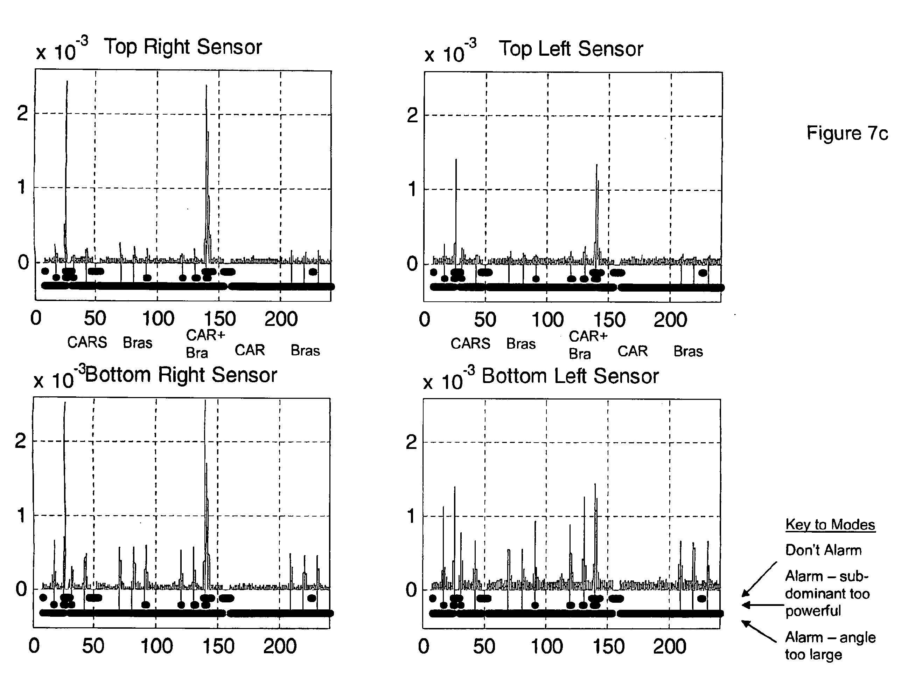

Data set A9 contains 12 examples of bras being passed through the Ferroguard sensors. Results for this data set are shown in Figures 7a to 7c. All of these produce signals large enough to detect on individual sensors. It also contains four car signals:

Two of the car signals are quite low in power (one especially so), and do not occur near the times the bras were passed through the sensors. These two were effectively detected by the far-field detector;

The first car signal is very strong, and as has been noticed before the section of its closest approach is not detected as far-field, because the sub-dominant power is too high. This means a two second section is not flagged as far-field, while the preceding one second and following three seconds are. The end of this car signal coincides with a bra signal, and the algorithm successfully detects this and allows alarms.

The third car signal is almost exactly co-incident with a bra signal (denoted in figures 7a to 7c by the region labelled CAR + Bra). The first and last seconds of the (large) car signal are detected as far-field by the algorithm and ignored, but the rest of the signal (central five seconds) is marked as 'allow alarms'. This demonstrates the technique's ability to allow alarms when both a near-field and a far-field signal are present.

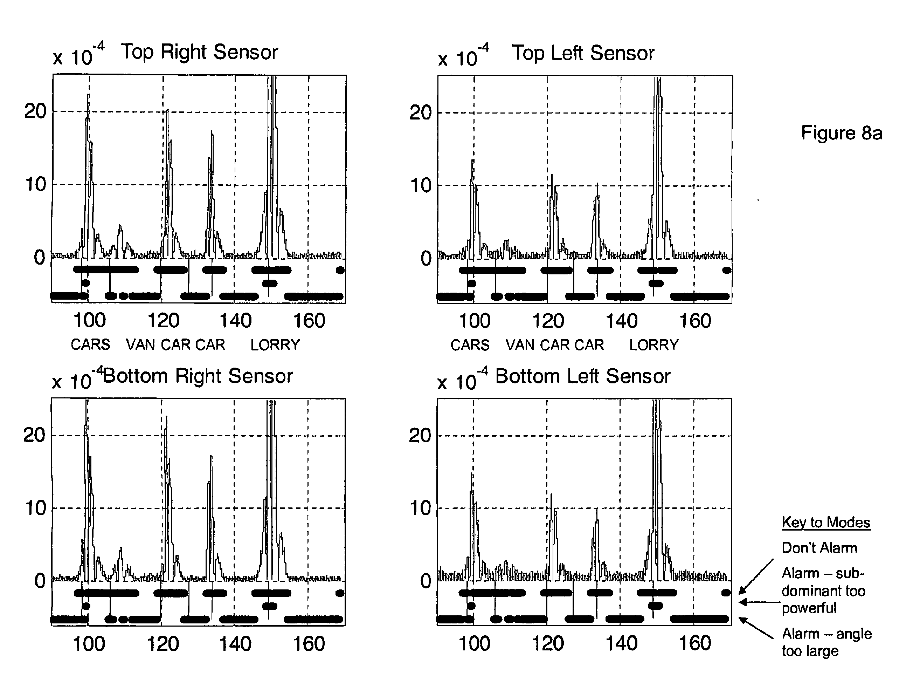

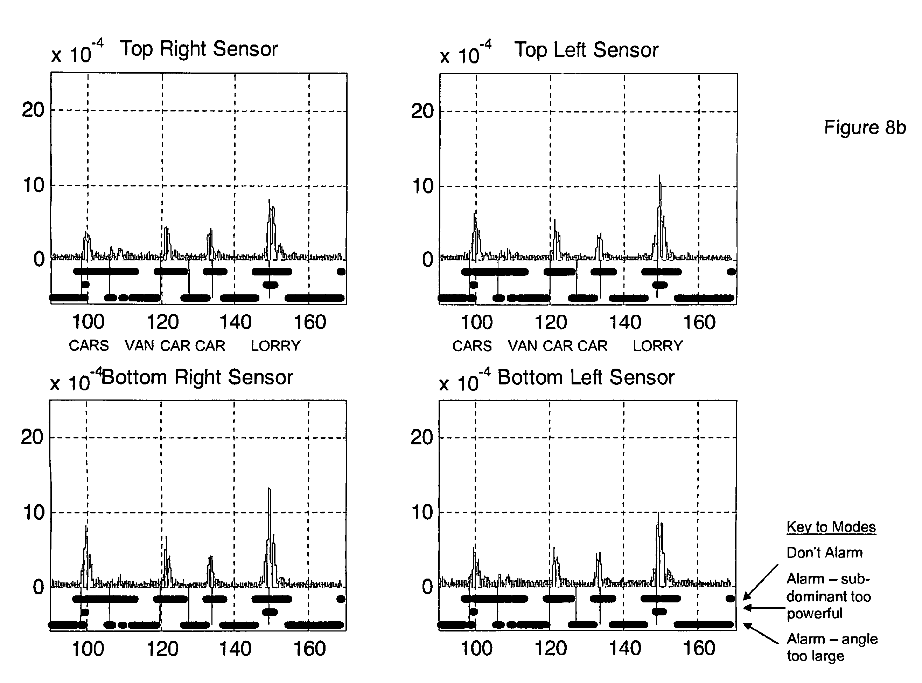

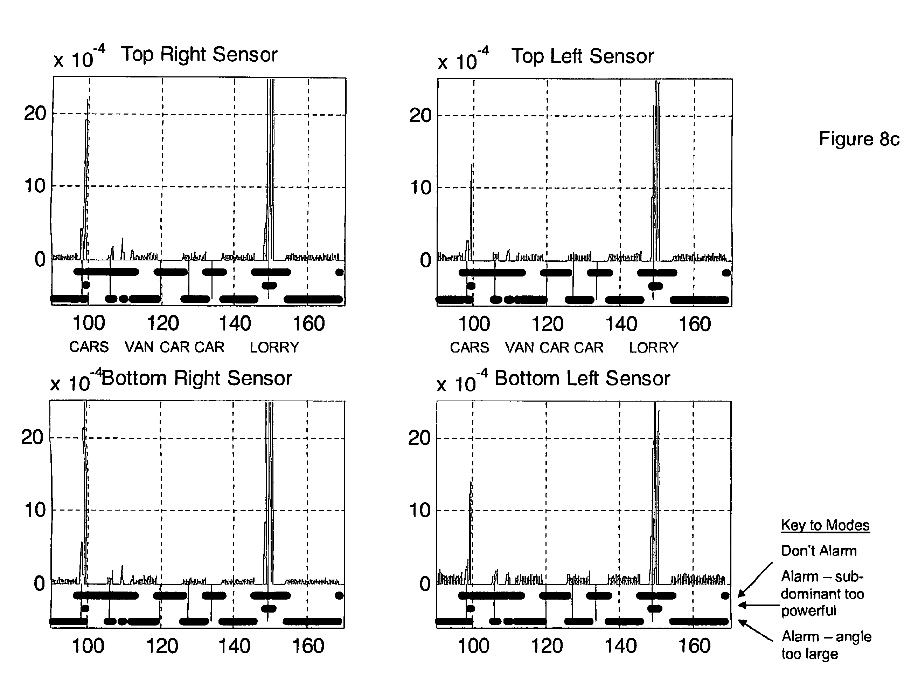

Data set A10 contains several examples of cars and other vehicles moving down the road about 5 to 7 metres away from the sensor set-up. Results for this data set are shown in Figures 8a to 8c. The flag-times are not thought to be as accurate here (as the recorder did not have direct line of sight to the road).

Several of these vehicle signals are large enough that the far-field detector does not detect the closest point part of their signal as far-field. However in all cases the early and late sections of the signals are correctly labelled as far-field. Only two small (one second each) sections are not detected as far-field for the car signals. However the very large lorry signal has a five second section which is not detected as far-field. This is probably reasonable for two reasons: Overall size of the signal, which makes the sub-dominant power likely to be larger;

Size of the distributed source - at a range of six metres, there is no way that a lorry can be sensibly modelled as a point source; instead it will be a distributed source with a 60 degree or similar spread.

This data set is good for showing both the ability of the far-field detection algorithm (25 seconds marked as far-field, only two seconds not so marked for the car signals) and its weakness (five seconds shown as not far-field of lorry signal, although these are sandwiched between two three-second far-field sections).

Data set A11 is similar to A10, containing more car signals. It does not contain any instances where the far-field algorithm does not label a large signal as far-field.

In summary, an embodiment of the present invention provides a method for reducing the level of false positives cause by far-field signals in the Ferroguard system. Due to the difficulties in correctly determining a far-field signal, and the requirement for minimal increase in false negatives, far-field induced false positives will not realistically be entirely eliminated by this method. However a good level of reduction has been demonstrated - 88% on the data sets collected.

Although suggestions for the various thresholds have been provided, further work may be required to ascertain values for the thresholds that would be most effective in actual deployment scenarios; in particular, studying data sets containing both near- and far-field signals at the same time will help in determining what values are suitable.

It will also be appreciated that the size of blocks used can be varied, and this can be done in a way so as to suit particular applications. It is also possible to use overlapping blocks, and also possible to include more than four aligned flux-gate sensors.

As has been explained, the method requires the computation of three quantities, namely the dominant component vector (v), the total subdominant power ($p_{cleaned}$) and the angle $\phi$. An advantageous alternative way to compute these quantities is to

- form the average of the signals from the sensors
- regress each individual signal onto the average signal (i.e. determine a Least Squared Error fit of the former with the latter), computing the scale factor required to achieve this and the residual error which results from the best fit.

The four scale factors (one corresponding to each sensor signal) together form the required dominant component vector (**v**), and the total subdominant power ($p_{cleaned}$) is obtained as the sum of the residual errors in the above calculation.

It is additionally advantageous to avoid computing the angle $\phi$ itself and then testing its modulus to determine whether it is less than a given threshold, by computing $\mathbf{v} \bullet \frac{1}{\sqrt{n}}[1 \quad \cdots \quad 1]$, which is mathematically equivalent to cos ($\phi$), and then testing the value of that quantity to determine whether it is greater than a given threshold.

These alternative algorithms are advantageous in that they require less computation. They can conveniently and efficiently be implemented either using overlapping block-based computations, or by using "rolling" (i.e. sample by sample) computations. In the latter (rolling) approach, block averages are replaced by the use of smoothing filters. These are well-known techniques.

It has been assumed above that the sensors are all calibrated to have the same voltage response to a given field strength. Such calibration could be applied to individual sensors before assembling the equipment. Alternatively it could be carried out by a calibration process applied to the assembled equipment, in which for example a magnetic source is placed at a number of known locations in succession, and the responses of all the sensors to the source are simultaneously measured. Such a procedure would also indicate whether the sensors were aligned relative to each other with sufficient accuracy. A further option is to calibrate the sensors' voltage responses adaptively. One method for doing this would be to make a record of the sensor responses during every time period for which the main algorithm decides that only a far-field source is present (that is to say, during every period for which the "Don't Allow Alarms" signal is set by the algorithm). By averaging over many such records, the average respective responses of the sensors will be obtained. For true far field sources these responses should be equal. Hence any inequality in the average responses may be assumed to be due to inaccurate calibration, and the gain adjustment required to make the sensor responses equal may be computed. This adjustment may then be applied to the respective sensors, thereby calibrating them. This process may be applied continuously during operation.

It will be appreciated that operation of one or more of the above-described blocks or components can be controlled by a program operating on the device or apparatus. Such an operating program can be stored on a computer-readable medium, or could, for example, be embodied in a signal such as a downloadable data signal provided from an Internet website.

## Claims

1. An apparatus for compensating for the effect of a stray ferromagnetic object moving past but not through a sensing region of a ferromagnetic object detector, **characterised in that** the ferromagnetic object detector is adapted to produce a sensor signal from each of three or more sensors, each sensor signal being influenced by the presence of a genuine ferromagnetic object moving through the sensing region but also liable to be influenced by the presence of the stray object, and the apparatus comprising: an input for receiving the plurality of sensor signals; first means (S1) for analysing the received signals to determine whether there is a substantially same time-varying component present in each of the signals; second means (S2) for determining whether the plurality of signals without the contribution of that time-varying component are each or collectively below a predetermined level of significance; and third means (S3,S4,S5) for indicating, if the respective determinations from the first and second means are both positive, that the received signals are likely to relate to a stray object and not to a genuine ferromagnetic object moving through the sensing region.

2. An apparatus according to claim 1 in which the first means comprises means to perform principal components analysis.

3. An apparatus as claimed in claim 1, wherein the first means comprise means for determining the dominant component of a vector made up of the plurality of sensor signals, each sensor signal comprising a plurality of time samples, and also a coefficient vector corresponding to the dominant component, the determination made by the first means being positive only if the coefficient vector is determined to be close to an all-ones vector according to a predetermined measure of closeness.

4. An apparatus as claimed in claim 3, wherein the predetermined measure of closeness is dependent upon an angle between the coefficient vector and the unit vector $\frac{1}{\sqrt{n}}[1 \quad \cdots \quad 1]$, where *n* is the number of sensors.

5. An apparatus as claimed in claim 4, wherein the coefficient vector is determined to be sufficiently close if the angle is lower than 30°.

6. An apparatus as claimed in claim 5, wherein the coefficient vector is determined to be sufficiently close if the angle is lower than 25°.

7. An apparatus as claimed in claim 6, wherein the coefficient vector is determined to be sufficiently close if the angle is lower than 10°.

8. An apparatus as claimed in any one of claims 3 to 7, wherein the second means comprise means for calculating the total power of the sub-dominant components, or those components other than the dominant component, the determination made by the second means being positive only if the sub-dominant power is determined to be below a predetermined threshold.

9. An apparatus as claimed in claim 8, wherein the vector of sensor signals is denoted as $\mathbf{S} = \begin{bmatrix} \mathbf{s}_1 \\ \mathbf{s}_2 \\ \vdots \\ \mathbf{s}_n \end{bmatrix}$, where *n* is the number of sensors and $\mathbf{s}_i$ is a 1-by-**T** vector of **T** samples from sensor *i*, wherein the coefficient vector corresponding to the dominant component of **S** is denoted by **v**, a 1-by-*n* vector, and wherein a vector of the sub-dominant components is determined according to $\mathbf{S}_{cleaned} = \mathbf{PS}$ , where $\mathbf{P}$ is a projection matrix given by $\mathbf{P}=\mathbf{I}_n - \mathbf{v}^H\mathbf{v}$ .

**10.** An apparatus as claimed in claim 9, wherein the sub-dominant power is calculated according to

$$p_{cleaned} = trace\left(\mathbf{S}_{cleaned}\mathbf{S}_{cleaned}^{H}\right).$$

**11.** An apparatus as claimed in claim 1, when dependent on claim 4, wherein the angle is determined as

$$\phi = \cos^{-1}\left(\mathbf{v} \bullet \frac{1}{\sqrt{n}}\begin{bmatrix}1 & \cdots & 1\end{bmatrix}\right),$$ where $\mathbf{v}$ is the coefficient vector.

**12.** An apparatus as claimed in any preceding claim, wherein the method is performed taking account of variations in gain and/or alignment of the sensors.

**13.** A system comprising a ferromagnetic object detector and an apparatus as claimed in any preceding claim.

**14.** A magnetic resonance imaging scanner comprising a system as claimed in claim 13.

**15.** A method for compensating for the effect of a stray ferromagnetic object moving past but not through a sensing region of a ferromagnetic object detector, **characterised in that** the ferromagnetic object detector is adapted to produce a sensor signal from each of three or more sensors, each sensor signal being influenced by the presence of a genuine ferromagnetic object moving through the sensing region but also liable to be influenced by the presence of the stray object, and the method comprising: receiving the plurality of sensor signals; analysing (S1) the received signals to determine whether there is a substantially same time-varying component present in each of the signals; determining (S2) whether the plurality of signals without the contribution of that time-varying component are each or collectively below a predetermined level of significance; and indicating (S3,S4,S5), if the respective determinations from the first and second means are both positive, that the received signals are likely to relate to a stray object and not to a genuine ferromagnetic object moving through the sensing region.

**16.** A program for controlling an apparatus to perform a method as claimed in claim 15.

## Patentansprüche

**1.** Vorrichtung zum Kompensieren des Einflusses eines ferromagnetischen Streuobjekts, das sich an einem Erfassungsbereich eines Detektors für ferromagnetische Objekte vorbei, jedoch nicht durch diesen hindurch bewegt, **dadurch gekennzeichnet, dass** der Detektor für ferromagnetische Objekte ausgebildet ist, von jedem von drei oder mehr Sensoren ein Sensorsignal zu erzeugen, wobei jedes der Sensorsignale durch das Vorhandensein eines echten, sich durch den Erfassungsbereich bewegenden ferromagnetischen Objekts beeinflusst wird, aber auch einer Beeinflussung durch das Vorhandensein des Streuobjekts unterliegt, und die Vorrichtung Folgendes umfasst: einen Eingang zum Erhalten der mehreren Sensorsignale; eine erste Einrichtung (S1) zum Analysieren der erhaltenen Signale zur Bestimmung, ob in jedem der Signale eine im Wesentlichen gleiche zeitveränderliche Komponente vorhanden ist; eine zweite Einrichtung (S2) zum Bestimmen, ob sich die mehreren Signale ohne den Beitrag der zeitveränderlichen Komponente jeweils einzeln oder insgesamt unterhalb einer vorgegebenen Berücksichtigungsschwelle befinden; und eine dritte Einrichtung (S3, S4, S5) zum Anzeigen, dass die erhaltenen Signale sich, wenn die jeweiligen Bestimmungen durch die erste und zweite Einrichtung positiv sind, wahrscheinlich auf ein Streuobjekt und nicht auf ein sich durch den Erfassungsbereich bewegendes echtes ferromagnetisches Objekt beziehen.

**2.** Vorrichtung nach Anspruch 1, worin die erste Einrichtung eine Einrichtung zum Durchführen einer Hauptkomponentenanalyse aufweist.

**3.** Vorrichtung wie in Anspruch 1 beansprucht, worin die erste Einrichtung eine Einrichtung zum Bestimmen der dominanten Komponente eines aus den mehreren Sensorsignalen erstellten Vektors aufweist, wobei jedes der Sensorsignale mehrere Zeitwerte umfasst, und auch eines der dominanten Komponente entsprechenden Koeffizientenvektors, wobei die von der ersten Einrichtung vorgenommene Bestimmung nur dann positiv ist, wenn der Koeffizientenvektor als entsprechend einem vorgegebenen Näherungsmaß einem nur Einsen aufweisenden Vektor angenähert bestimmt wird.

4. Vorrichtung wie in Anspruch 3 beansprucht, worin das vorgegebene Näherungsmaß von einem Winkel zwischen dem Koeffizientenvektor und dem Einheitsvektor $\frac{1}{\sqrt{n}}[1 \dots 1]$ abhängt, wobei n die Anzahl der Sensoren darstellt.

5. Vorrichtung wie in Anspruch 4 beansprucht, worin der Koeffizientenvektor als ausreichend angenähert bestimmt ist, wenn der Winkel kleiner als 30° ist.

6. Vorrichtung wie in Anspruch 5 beansprucht, worin der Koeffizientenvektor als ausreichend angenähert bestimmt ist, wenn der Winkel kleiner als 25° ist.

7. Vorrichtung wie in Anspruch 6 beansprucht, worin der Koeffizientenvektor als ausreichend angenähert bestimmt ist, wenn der Winkel kleiner als 10° ist.

8. Vorrichtung wie in einem der Ansprüche 3 bis 7 beansprucht, worin die zweite Vorrichtung eine Einrichtung zum Berechnen der Gesamtleistung der subdominanten Komponenten bzw. jener von der dominanten Komponente verschiedenen Komponenten aufweist, wobei die von der zweiten Einrichtung vorgenommene Bestimmung nur dann positiv ist, wenn die subdominante Leistung als unterhalb eines vorgegebenen Schwellwerts liegend bestimmt wird.

9. Vorrichtung wie in Anspruch 8 beansprucht, worin der Vektor der Sensorsignale als s= bezeichnet ist, wobei n die Anzahl der Sensoren und $\mathbf{s}_i$ einen 1-mal-T-Vektor von T Proben eines Sensors i bezeichnet, und worin der Koeffizientenvektor, der der dominanten Komponente von **S** entspricht, mit **v**, einem 1-mal-n-Vektor, bezeichnet ist, und worin ein Vektor der subdominanten Komponenten entsprechend $\mathbf{S}_{gereinigt} = \mathbf{PS}$ bestimmt ist, wobei **P** eine durch $\mathbf{P} = \mathbf{I}_n - \mathbf{v}^H \mathbf{v}$ gegebene Projektionsmatrix ist.

10. Vorrichtung wie in Anspruch 9 beansprucht, worin die subdominante Leistung entsprechend $\mathbf{p}_{gereinigt} = Spur(\mathbf{S}_{gereinigt}\mathbf{S}^H_{gereinigt})$ berechnet wird.

11. Vorrichtung wie in Anspruch 1 soweit von Anspruch 4 abhängig beansprucht, worin der Winkel als $\phi = cos^{-1}\left(\mathbf{v} \bullet \frac{1}{\sqrt{n}}[1 \dots 1]\right)$ bestimmt ist, wobei **v** der Koeffizientenvektor ist.

12. Vorrichtung wie in einem der vorergehenden Ansprüche beansprucht, worin das Verfahren unter Berücksichtigung von Variationen in der Empfindlichkeit und/oder der Ausrichtung der Sensoren ausgeführt wird.

13. System, das einen Detektor für ferromagnetische Objekte und eine wie in einem der vorhergehenden Ansprüche beanspruchte Vorrichtung aufweist.

14. Bildgebender Magnetresonanzscanner, der ein wie in Anspruch 13 beanspruchtes System aufweist.

15. Verfahren zum Kompensieren des Einflusses eines ferromagnetischen Streuobjekts, das sich an einem Erfassungsbereich eines Detektors für ferromagnetische Objekte vorbei, jedoch nicht durch diesen hindurch bewegt, **dadurch gekennzeichnet, dass** der Detektor für ferromagnetische Objekte ausgebildet ist, von jedem von drei oder mehr Sensoren ein Sensorsignal zu erzeugen, wobei jedes der Sensorsignale durch das Vorhandensein eines echten, sich durch den Erfassungsbereich bewegenden ferromagnetischen Objekts beeinflusst wird, aber auch einer Beeinflussung durch das Vorhandensein des Streuobjekts unterliegt, und das Verfahren Folgendes umfasst: Erhalten der mehreren Sensorsignale; Analysieren (S1) der erhaltenen Signale zum Bestimmen, ob in jedem der Signale eine im Wesentlichen gleiche zeitveränderliche Komponente vorhanden ist; Bestimmen (S2), ob sich die mehreren Signale ohne den Beitrag der zeitveränderlichen Komponente jeweils einzeln oder insgesamt unterhalb einer vorgegebenen Berücksichtigungsschwelle befinden; und Anzeigen (S3, S4, S5), dass die erhaltenen Signale sich, wenn die jeweiligen Bestimmungen der ersten und zweiten Einrichtung positiv sind, wahrscheinlich auf ein Streuobjekt und nicht auf ein sich durch den Erfassungsbereich bewegendes echtes ferromagnetisches Objekt beziehen.

16. Programm zum Steuern einer Vorrichtung zum Durchführen eines wie in Anspruch 15 beanspruchten Verfahrens.

## Revendications

1. Dispositifpour compenser l'effet d'un objet ferromagnétique parasite se déplaçant au-delà mais pas à travers une région de détection d'un détecteur d'objets ferromagnétiques, **caractérisé en ce que** le détecteur d'objets ferromagnétiques est adapté pour produire un signal de capteur provenant de chacun de trois capteurs ou plus, chaque signal de capteur étant influencé par la présence d'un objet ferromagnétique authentique se déplaçant à travers la région de détection mais également susceptible d'être influencé par la présence de l'objet parasite, et le dispositif comprenant : une entrée pour recevoir la pluralité de signaux de capteur ; des premiers moyens (S1) pour analyser les signaux reçus pour déterminer s'il existe une composante variant dans le temps sensiblement identique présente dans chacun des signaux ; des deuxièmes moyens (S2) pour déterminer si la pluralité de signaux sans la contribution de la composante variant dans le temps sont chacun ou collectivement au-dessous d'un niveau de signification prédéterminé ; et des troisièmes moyens (S3, S4, S5) pour indiquer, si les déterminations respectives provenant des premiers et deuxièmes moyens sont toutes deux positives, que les signaux reçus sont probablement liés à un objet parasite et non à un objet ferromagnétique authentique se déplaçant à travers la région de détection.

2. Dispositif selon la revendication 1, dans lequel les premiers moyens comprennent des moyens pour effectuer une analyse de composantes principales.

3. Dispositif selon la revendication 1, dans lequel les premiers moyens comprennent des moyens pour déterminer la composante dominante d'un vecteur composé de la pluralité de signaux de capteur, chaque signal de capteur comprenant une pluralité d'échantillons de temps, et également un vecteur de coefficient correspondant à la composante dominante, la détermination effectuée par les premiers moyens étant positive seulement si le vecteur de coefficient est déterminé comme étant proche d'un vecteur tout-à-un en fonction d'une mesure de proximité prédéterminé.

4. Dispositif selon la revendication 3, dans lequel la mesure de proximité prédéterminée est dépendante d'un angle entre le vecteur de coefficient et le vecteur unitaire $\frac{1}{\sqrt{n}}[1 \ldots 1]$, où n est le nombre de capteurs.

5. Dispositif selon la revendication 4, dans lequel le vecteur de coefficient est déterminé comme étant suffisamment proche si l'angle est inférieur à 30°.

6. Dispositif selon la revendication 5, dans lequel le vecteur de coefficient est déterminé comme étant suffisamment proche si l'angle est inférieur à 25°.

7. Dispositif selon la revendication 6, dans lequel le vecteur de coefficient est déterminé comme étant suffisamment proche si l'angle est inférieur à 10°.

8. Dispositif selon l'une quelconque des revendications 3 à 7, dans lequel les deuxièmes moyens comprennent des moyens pour calculer la puissance totale des composantes sous-dominantes, ou des composantes autres que la composante dominante, la détermination effectuée par les deuxièmes moyens étant positive seulement si la puissance sous-dominante est déterminée comme étant au-dessous d'un seuil prédéterminé.

9. Dispositif selon la revendication 8, dans lequel le vecteur de signaux de capteur est indiqué comme $S = \begin{bmatrix} S_1 \\ S_2 \\ \vdots \\ S_n \end{bmatrix}$, où n est le nombre de capteurs et s; est un vecteur 1 par **T** de T échantillons provenant du capteur i, dans lequel le vecteur de coefficient correspondant à la composante dominante de S est indiqué par v, un vecteur 1 par n, et dans lequel un vecteur de composantes sous-dominantes est déterminé selon $S_{cleaned} = PS$, où P est une matrice de projection donnée par $P = I_n - v^H v$.

10. Dispositif selon la revendication 9, dans lequel la puissance sous-dominante est calculée selon $P_{cleaned} = trace(S_{cleaned} S_{cleaned}^H)$.

11. Dispositif selon la revendication 1, quand elle dépend de la revendication 4, dans lequel l'angle est déterminé comme

$\phi = \cos^{-1}\left(v \bullet \frac{1}{\sqrt{n}}[1 \ldots 1]\right)$, où v est le vecteur de coefficient.

**12.** Dispositif selon l'une quelconque des revendications précédentes, dans lequel le procédé est effectué en tenant compte de variations de gain et/ou d'alignement des capteurs.

**13.** Système comprenant un détecteur d'objets ferromagnétiques et un dispositif selon l'une quelconque des revendications précédentes.

**14.** Appareil de balayage pour imagerie par résonance magnétique comprenant un système selon la revendication 13.

**15.** Procédé pour compenser l'effet d'un objet ferromagnétique parasite se déplaçant au-delà mais pas à travers une région de détection d'un détecteur d'objets ferromagnétiques, **caractérisé en ce que** le détecteur d'objets ferromagnétiques est adapté pour produire un signal de capteur provenant de chacun de trois capteurs ou plus, chaque signal de capteur étant influencé par la présence d'un objet ferromagnétique authentique se déplaçant à travers la région de détection mais également susceptible d'être influencé par la présence de l'objet parasite, et le dispositif comprenant : la réception de la pluralité de signaux de capteur ; l'analyse (S1) des signaux reçus pour déterminer s'il existe une composante variant dans le temps sensiblement identique présente dans chacun des signaux ; la détermination (S2) du fait que la pluralité de signaux sans la contribution de cette composante variant dans le temps sont chacun ou collectivement au-dessous d'un niveau de signification prédéterminé ; et l'indication (S3, S4, S5), si les déterminations respectives provenant des premiers et deuxièmes moyens sont toutes deux positives, du fait que les signaux reçus sont probablement liés à un objet parasite et non à un objet ferromagnétique authentique se déplaçant à travers la région de détection.

**16.** Programme pour commander un dispositif pour effectuer le procédé selon la revendication15.

Figure 1

Start
Sensor Signals
S1
Find dominant component and coefficient vector
Coefficient Vector (v)
Calculate power of sub-dominant components
S4
S2
Sub-dominant power ($p_{cleaned}$)
Is this above the noise floor?
No
Calculate modulus of angle $\phi$ between coefficient vector and [0.5 0.5 0.5 0.5]
S3
Modulus of Angle
Yes
S5
Is this above a threshold ?
Yes
No
Allow Alarms
Don't Allow Alarms

x $10^{-4}$ Top Right Sensor
x $10^{-4}$ Top Left Sensor
Figure 2a
6
4
2
0
0
50
100
150
200
Cylinder on L side
Cylinder on R side
Phone in R pocket
x $10^{-4}$ Bottom Right Sensor
x $10^{-4}$ Bottom Left Sensor
Key to Modes
Don't Alarm
Alarm – sub-dominant too powerful
Alarm – angle too large

Figure 2b
x 10^-4 Top Right Sensor
x 10^-4 Top Left Sensor
x 10^-4 Bottom Right Sensor
x 10^-4 Bottom Left Sensor
6
4
2
0
0
50
100
150
200
Cylinder on L side
Cylinder on R side
Phone in R pocket
Key to Modes
Don't Alarm
Alarm – sub-dominant too powerful
Alarm – angle too large

x 10$^{-4}$ Top Right Sensor
x 10$^{-4}$ Top Left Sensor
x 10$^{-4}$ Bottom Right Sensor
x 10$^{-4}$ Bottom Left Sensor
6
4
2
0
0
50
100
150
200
Cylinder on L side
Cylinder on R side
Phone in R pocket
Key to Modes
Don't Alarm
Alarm – sub-dominant too powerful
Alarm – angle too large

Figure 2c

x 10^-3 Top Right Sensor
x 10^-3 Top Left Sensor
Stetho -scope
CAR
Razor in R pocket
Tape Measure
VAN
x 10^-3 Bottom Right Sensor
x 10^-3 Bottom Left Sensor
Key to Modes
Don't Alarm
Alarm – sub-dominant too powerful
Alarm – angle too large

Figure 3a

x 10-3 Top Right Sensor
x 10-3 Top Left Sensor
x 10-3 Bottom Right Sensor
x 10-3 Bottom Left Sensor
2
1
0
-1
0
50
100
150
Stetho -scope
CAR
Razor in R pocket
Tape Measure
VAN
Key to Modes
Don't Alarm
Alarm – sub-dominant too powerful
Alarm – angle too large

Figure 3b

x 10^-3 Top Right Sensor
x 10^-3 Top Left Sensor
x 10^-3 Bottom Right Sensor
x 10^-3 Bottom Left Sensor
2
1
0
-1
0
50
100
150
Stetho -scope
CAR
Razor in R pocket
Tape Measure
VAN
Key to Modes
Don't Alarm
Alarm – sub-dominant too powerful
Alarm – angle too large

Figure 3c

Figure 4a
x 10^-4 Top Right Sensor
x 10^-4 Top Left Sensor
x 10^-4 Bottom Right Sensor
x 10^-4 Bottom Left Sensor
0
2
4
6
0
50
100
150
200
Keys in R pocket
PSU on R side
?
Phone in R pocket
Watch on L wrist
Key to Modes
Don't Alarm
Alarm – sub-dominant too powerful
Alarm – angle too large

x 10^-4 Top Right Sensor
x 10^-4 Top Left Sensor
x 10^-4 Bottom Right Sensor
x 10^-4 Bottom Left Sensor
Keys in R pocket
PSU on R side
?
Phone in R pocket
Watch on L wrist
Key to Modes
Don't Alarm
Alarm – sub-dominant too powerful
Alarm – angle too large

Figure 4b

Top Right Sensor
Top Left Sensor
Bottom Right Sensor
Bottom Left Sensor
x 10-4
0
2
4
6
0
50
100
150
200
Keys in R pocket
PSU on R side
?
Phone in R pocket
Watch on L wrist
Key to Modes
Don't Alarm
Alarm – sub-dominant too powerful
Alarm – angle too large

Figure 4c

x 10^-3 Top Right Sensor
x 10^-3 Top Left Sensor
x 10^-3 Bottom Right Sensor
x 10^-3 Bottom Left Sensor
2
1
0
-1
0
50
100
150
Hair grips in R pocket
CAR
Hammer in R hand
Pliers + CAR
Key to Modes
Don't Alarm
Alarm – angle too large

Figure 5a

Top Right Sensor
Top Left Sensor
Bottom Right Sensor
Bottom Left Sensor
x 10^-3
2
1
0
-1
0
50
100
150
Hair grips in R pocket
CAR
Hammer in R hand
Pliers + CAR
Key to Modes
Don't Alarm
Alarm – angle too large

Figure 5b

x 10^-3 Top Right Sensor
x 10^-3 Top Left Sensor
Figure 5c
2
1
0
-1
0
50
100
150
Hair grips in R pocket
CAR
Hammer in R hand
Pliers + CAR
x 10^-3 Bottom Right Sensor
x 10^-3 Bottom Left Sensor
Key to Modes
Don't Alarm
Alarm – angle too large

x 10-3 Top Right Sensor
x 10-3 Top Left Sensor
CAR Spanner in R pocket
CAR All normal stuff
CAR Spanner in R pocket
CAR All normal stuff
x 10-3 Bottom Right Sensor
x 10-3 Bottom Left Sensor
Key to Modes
Don't Alarm
Alarm – sub-dominant too powerful
Alarm – angle too large

Figure 6a

Figure 6b

x 10^-3 Top Right Sensor
2
1
0
-1
0
50
100
150
200
CAR Spanner in R pocket
CAR All normal stuff
x 10^-3 Top Left Sensor
3
2
1
0
-1
0
50
100
150
200
CAR Spanner in R pocket
CAR All normal stuff
x 10^-3 Bottom Right Sensor
6
4
2
0
-2
0
50
100
150
200
x 10^-3 Bottom Left Sensor
3
2
1
0
-1
0
50
100
150
200
Key to Modes
Don't Alarm
Alarm – sub-dominant too powerful
Alarm – angle too large

Top Right Sensor
Top Left Sensor
Bottom Right Sensor
Bottom Left Sensor
x 10^-3
CAR Spanner in R pocket
CAR All normal stuff
Key to Modes
Don't Alarm
Alarm – sub-dominant too powerful
Alarm – angle too large

Figure 6c

x 10^-3 Top Right Sensor
x 10^-3 Top Left Sensor
x 10^-3 Bottom Right Sensor
x 10^-3 Bottom Left Sensor
2
1
0
0
50
100
150
200
CARS
Bras
CAR+
Bra
CAR
Bras
Key to Modes
Don't Alarm
Alarm – sub-dominant too powerful
Alarm – angle too large


Figure 7a

x 10^-3 Top Right Sensor
x 10^-3 Top Left Sensor
x 10^-3 Bottom Right Sensor
x 10^-3 Bottom Left Sensor
2
1
0
0
50
100
150
200
CARS
Bras
CAR+
Bra
CAR
Bras
Key to Modes
Don't Alarm
Alarm – sub-dominant too powerful
Alarm – angle too large

Figure 7b

x 10^-3 Top Right Sensor
x 10^-3 Top Left Sensor
Figure 7c
2
1
0
0
50
100
150
200
CARS
Bras
CAR+
Bra
CAR
Bras
x 10^-3 Bottom Right Sensor
x 10^-3 Bottom Left Sensor
Key to Modes
Don't Alarm
Alarm – sub-dominant too powerful
Alarm – angle too large

Figure 8a
Top Right Sensor
Top Left Sensor
Bottom Right Sensor
Bottom Left Sensor
x 10-4
20
10
0
100
120
140
160
CARS VAN CAR CAR LORRY
Key to Modes
Don't Alarm
Alarm – sub-dominant too powerful
Alarm – angle too large

x 10-4 Top Right Sensor
20
10
0
100
120
140
160
CARS VAN CAR CAR LORRY
x 10-4 Top Left Sensor
20
10
0
100
120
140
160
CARS VAN CAR CAR LORRY
Figure 8b
x 10-4 Bottom Right Sensor
20
10
0
100
120
140
160
x 10-4 Bottom Left Sensor
20
10
0
100
120
140
160
Key to Modes
Don't Alarm
Alarm – sub-dominant too powerful
Alarm – angle too large

x 10^-4 Top Right Sensor
20
10
0
100
120
140
160
CARS VAN CAR CAR LORRY
x 10^-4 Top Left Sensor
20
10
0
100
120
140
160
CARS VAN CAR CAR LORRY
x 10^-4 Bottom Right Sensor
20
10
0
100
120
140
160
x 10^-4 Bottom Left Sensor
20
10
0
100
120
140
160
Key to Modes
Don't Alarm
Alarm – sub-dominant too powerful
Alarm – angle too large

Figure 8c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004044620 A
- US 5896031 A